# EUROPEAN PATENT SPECIFICATION

(11) **EP 3 616 878 B1**
(45) Date of publication and mention of the grant of the patent: **18.12.2024**
(21) Application number: 18790048.5
(22) Date of filing: 26.04.2018
(51) Int. Cl.: B29D 7/01, B29C 48/00, B29C 48/07, B29C 48/21, B29C 48/88, B29C 48/885, B29C 48/92, B32B 7/027, B32B 27/08, B32B 27/20, B32B 27/28, B32B 27/30, B32B 27/32, B32B 27/36, B32B 27/38, B32B 27/42, B29K 33/00, B29K 69/00

(54) **EXTRUDED RESIN PLATE AND MANUFACTURING METHOD THEREOF**
EXTRUDIERTE HARZPLATTE UND HERSTELLUNGSVERFAHREN DAFÜR
PLAQUE DE RÉSINE EXTRUDÉE ET SON PROCÉDÉ DE FABRICATION

(30) Priority: 28.04.2017 JP 2017089450
(43) Date of publication of application: 04.03.2020
(73) Proprietor: Kuraray Co., Ltd., Okayama 710-0801 (JP)
(72) Inventor: FUNAZAKI, Kazuo, Tainai-shi Niigata 959-2691 (JP)
(74) Representative: Müller-Boré & Partner Patentanwälte PartG mbB
(86) International application number: PCT/JP2018/016931
(87) International publication number: WO 2018/199213

(56) References cited:
- WO-A1-2015/064928
- WO-A1-2015/093037
- WO-A1-2015/093037
- WO-A1-2016/042727
- WO-A1-2016/042727

## Description

### Technical Field

The present invention relates to an extruded resin plate and a method for manufacturing the extruded resin plate.

### Background Art

Flat-panel displays such as liquid crystal displays, and touch panel displays in which such flat-panel displays are combined with touch panels (also called touch screens) are used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems.

A transparent protective plate is provided on a surface of, for example, a liquid crystal display or a touch panel in order to prevent scratches and the like from being formed on the surface. Conventionally, tempered glass has been mainly used as such protective plates. However, the development of transparent resin plates has been in progress in view of their workability and lightweight. The protective plate is required to have features such as luster, abrasion resistance, and impact resistance.

As a protective plate made of a transparent resin, a resin plate including a polycarbonate layer, which is excellent in impact resistance, and a methacrylic resin layer, which is excellent in luster and abrasion resistance, has been studied. Such a resin plate is preferably manufactured by coextrusion molding. In this case, a strain stress may remain in the obtained resin plate due to a difference between characteristics of these two types of resins. The strain stress remaining on the resin plate is called a "residual stress". In a resin plate having this residual stress, there is a possibility that warping or the like may occur due to a thermal change or the like.

As a method for reducing a residual stress in a resin plate and thereby preventing warping from occurring, Patent Literature 1 discloses a method for adjusting a rotating speed of a cooling roll used for extrusion molding (Claim 1). Patent Literature 2 discloses a method using a resin which is obtained by copolymerizing, as a methacrylic resin to be laminated on polycarbonate, a methacrylic acid ester such as methyl methacrylate (MMA) and an aromatic vinyl monomer such as styrene, and then hydrogenating an aromatic double bond (Claim 2).

Further, in order to solve the above-described problem, improvements in heat resistance and moisture resistance of methacrylic resins have been studied. For example, Patent Literature 3 discloses a method using, as a methacrylic resin to be laminated on polycarbonate, a resin having an MMA unit, and a unit selected from a methacrylic acid (MA) unit, an acrylic acid (AA) unit, a maleic anhydride unit, an N-substituted or unsubstituted maleimide unit, a glutaric anhydride structural unit, and a glutarimide structural unit, and having a glass transition temperature (Tg) of 110°C or higher (Claim 1).

Further, Patent Literature 4 discloses a method for reducing a difference between linear expansion rates (also referred to as linear expansion coefficients) of two resin sheets in a decorative sheet in which the two resin sheets are laminated with at least one design layer interposed therebetween (Claim 1).

A cured film having a low reflectivity for providing abrasion resistance (a hard coat property) and/or improving visibility can be formed on at least one of the surfaces of a protective plate (Claims 1 and 2 of Patent Literature 5, Claim 1 of Patent Literature 6, etc.).

A protective plate for a liquid crystal display is disposed on the front side (the viewer side) of the liquid crystal display, and a viewer views the screen of the liquid crystal display through this protective plate. Note that the protective plate hardly changes a polarization property of light emitted from the liquid crystal display. Therefore, when the screen is viewed through a polarizing filter such as polarized sunglasses, the screen may become darker depending on the angle between the polarization axis of the emitted light and the transmission axis of the polarizing filter, and hence the visibility of images may deteriorate. Therefore, a protective plate for a liquid crystal display, capable of preventing the deterioration of the visibility of images, which may occur when the screen of the liquid crystal display is viewed through the polarizing filter, has been studied. For example, Patent Literature 7 discloses a liquid crystal display protective plate formed of an abrasion resistant resin plate including a cured film formed on at least one of the surfaces of a resin substrate and having an in-plane retardation (Re) value of 85 to 300 nm (Claim 1).

In general, a stress occurs in an extruded resin plate when it is molded. As a result, molecules may be oriented and hence retardation may occur (see paragraph [0034] of Patent Literature 8). Further, in an extruded resin plate including a plurality of resin layers, each of the resin layers may have a different degree of a residual stress. Further, in the molding of an extruded resin plate, when the extruded resin plate is separated from the last cooling roll, streaky defects (so-called chatter marks) may occur on the surface of the extruded resin plate and hence its surface quality may deteriorate. It is possible to reduce the stress and the chatter marks that may occur during the molding by adjusting manufacturing conditions such as rotating speeds of cooling rolls and take-off rolls used in the extrusion molding.

For example, in order to reduce the stress that occurs during the molding of an extruded resin plate and to prevent an Re value from decreasing, each of Patent Literatures 8 and 9 discloses a method for manufacturing an extruded resin plate, in which when the extruded resin plate including a methacrylic resin layer laminated on at least one surface of a polycarbonate layer is coextruded, manufacturing conditions such as a relation between circumferential speeds of a plurality of cooling rolls and take-off rolls and an overall temperature of the resin at the time when the extruded resin plate is separated from the last cooling roll are optimized (Claim 1 of Patent Literature 8, Claims 3 and 4 of Patent Literature 9, etc.).

### Citation List

### Patent Literature

Patent Literature 1: Japanese Unexamined Patent Application Publication No. 2007-185956
Patent Literature 2: International Patent Publication No. WO201 1/145630
Patent Literature 3: Japanese Unexamined Patent Application Publication No. 2009-248416
Patent Literature 4: Japanese Unexamined Patent Application Publication No. 2007-118597
Patent Literature 5: Japanese Unexamined Patent Application Publication No. 2004-299199
Patent Literature 6: Japanese Unexamined Patent Application Publication No. 2006-103169
Patent Literature 7: Japanese Unexamined Patent Application Publication No. 2010-085978
Patent Literature 8: International Patent Publication No. WO2015/093037
Patent Literature 9: International Patent Publication No. WO2016/038868

### Summary of Invention

### Technical Problem

In a step of forming a cured film having abrasion resistance (a hard coat property) and/or a low reflectivity on the surface of a resin plate, the resin plate may be heated to a temperature of about 100°C. For example, a thermosetting coating material needs to be heated for its curing and a photo-curing coating material receives heat when it is irradiated with light. When a coating material contains a solvent, it may be heated for drying the solvent.

Further, a protective plate for a liquid crystal display mounted on a vehicle-mounted display device such as a car navigation system or a mobile telephone (including a smartphone) may be used in a high-temperature environment such as under sunlight in summer.

When a resin plate is exposed to a high temperature in a manufacturing process or under a use environment as described above, its Re value may decrease due to the heat and fall outside a desired range. It is desired that the thermal change of the Re value be small.

In Patent Literature 7, visibility is evaluated in an arrangement in which an angle between a transmission axis of a polarizer of a liquid crystal display and an extruding direction of a resin plate is 45° (paragraph [0072]). In some cases, the direction of the transmission axis of the polarizer of the liquid crystal display is inclined at 45° or horizontal with respect to an observation screen and the extruding direction of the resin plate is horizontal or vertical in view of the productivity and the effective utilization ratio of the resin plate. In such cases, the transmission axis of the polarizer of the liquid crystal display is parallel or perpendicular to the slow axis or the fast axis of surface-averaged retardation of the resin plate. In such relations, visibility may deteriorate irrespective of the Re value, especially when the screen is viewed through a polarizing filter such as polarized sunglasses. Note that the above-described problem has been found for the first time by the present inventors and no solution thereto has been shown in the past.

The present invention has been made in view of the above-described circumstances and an object thereof is to provide an extruded resin plate which is less prone to warping caused by a thermal change, has an in-plane retardation (Re) value within a suitable range and an axial direction of in-plane retardation within a suitable range, and has excellent surface quality, and provide a method for manufacturing such an extruded resin plate.

### Solution to Problem

The present invention provides an extruded resin plate according to claim 1 and a method for manufacturing the extruded resin plate according to claim 6. Preferred embodiments are claimed in the dependent claims.

### Advantageous Effects of Invention

According to the present invention, it is possible to provide an extruded resin plate which is less prone to warping caused by a thermal change, has an in-plane retardation (Re) value within a suitable range and an axial direction of in-plane retardation within a suitable range, and has excellent surface quality, and provide a method for manufacturing such an extruded resin plate.

### Brief Description of Drawings

Fig. 1 is a schematic cross section of an extruded resin plate according to a first embodiment of the present invention;
Fig. 2 is a schematic cross section of an extruded resin plate according to a second embodiment of the present invention; and
Fig. 3 is a schematic diagram of a manufacturing apparatus for an extruded resin plate according to an embodiment of the present invention.

### Description of Embodiments

### [Extruded Resin Plate]

The present invention relates to an extruded resin plate suitable as a protective plate or the like for a liquid crystal display, a touch panel, or the like. An extruded resin plate according to the present invention is a resin plate in which a layer containing a methacrylic resin (PM) (hereinafter, also simply referred to as a methacrylic-resin containing layer) is laminated on at least one surface of a layer containing polycarbonate (PC) (hereinafter, also simply referred to as a polycarbonate containing layer).

The polycarbonate (PC) is excellent in impact resistance. Meanwhile, the methacrylic resin (PM) is excellent in luster, transparency, and abrasion resistance. Therefore, the extruded resin plate in which these resins are laminated according to the present invention is excellent in luster, transparency, impact resistance, and abrasion resistance. Further, since the extruded resin plate according to the present invention is manufactured by an extrusion molding method, its productivity is excellent.

### (Methacrylic-resin Containing Layer)

The methacrylic-resin containing layer contains at least one type of a methacrylic resin (PM). The methacrylic resin (PM) is preferably a homopolymer or a copolymer containing a structural unit derived from at least one type of a methacrylic acid hydrocarbon ester (hereinafter, also simply referred to as a methacrylic acid ester) including methyl methacrylate (MMA).

A hydrocarbon group in the methacrylic acid ester may be an acyclic aliphatic hydrocarbon group such as a methyl group, an ethyl group, and a propyl group, an alicyclic hydrocarbon group, or an aromatic hydrocarbon group such as a phenyl group.

In view of transparency, the amount of a methacrylic acid ester monomer unit contained in the methacrylic resin (PM) is preferably 50 mass% or larger, more preferably 80 mass% or larger, and particularly preferably 90 mass% or larger, or may be 100 mass%.

The methacrylic resin (PM) may contain a structural unit derived from at least one type of a monomer other than the methacrylic acid ester. Examples of the other monomer(s) include acrylic acid esters such as methyl acrylate (MA), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. Among them, in view of availability, MA, ethyl acrylate, n-propyl acrylate, isopropyl acrylate, n-butyl acrylate, isobutyl acrylate, and tert-butyl acrylate are preferred. MA and ethyl acrylate are more preferred. Further, MA is particularly preferred. The amount of the structural unit derived from the other monomer(s) contained in the methacrylic resin (PM) is preferably 10 mass% or smaller, more preferably 5 mass% or smaller, and particularly preferably 2 mass% or smaller.

The methacrylic resin (PM) is preferably obtained by polymerizing at least one type of a methacrylic acid ester including MMA and, optionally, other monomers. When a plurality of types monomers are used, the polymerization is usually performed after preparing a monomer mixture by mixing the plurality of types of monomers. The polymerization method is not limited to any particular methods. In view of productivity, a radical polymerization method such as a bulk polymerization method, a suspension polymerization method, a solution polymerization method, and an emulsion polymerization method is preferred.

The weight average molecular weight (Mw) of the methacrylic resin (PM) is preferably 40,000 to 500,000. When the molecular weight Mw is 40,000 or higher, the methacrylic-resin containing layer has excellent abrasion resistance and excellent heat resistance. Further, when the molecular weight Mw is 500,000 or lower, the methacrylic-resin containing layer has excellent moldability.

In this specification, "Mw" is a standard polystyrene equivalent molecular weight measured by using gel permeation chromatography (GPC) unless otherwise specified.

In this specification, the glass transition temperature of the methacrylic-resin containing layer is represented by Tg(M). There is no particular limitation on the glass transition temperature Tg(M). In order to facilitate the manufacturing of extruded resin plates having excellent surface quality and being less prone to warping caused by a residual stress, the lower limit of Tg(M) is preferably 110°C, more preferably 115°C, particularly preferably 120°C, and most preferably 125°C. Further, the upper limit of Tg(M) is preferably 160°C, more preferably 155°C, and particularly preferably 150°C.

### <Methacrylic Resin (B)>

In an embodiment according to the present invention, the methacrylic-resin containing layer may contain a methacrylic resin (B) containing a structural unit derived from MMA and an alicyclic hydrocarbon ester.

In the following description, the alicyclic hydrocarbon ester is referred to as a "methacrylic acid ester (I)". Examples of the methacrylic acid ester (I) include methacrylic acid monocyclic aliphatic hydrocarbon esters such as cyclohexyl methacrylate, cyclopentyl methacrylate, and cycloheptyl methacrylate; and methacrylic acid polycyclic aliphatic hydrocarbon esters such as 2-norbornyl methacrylate, 2-methyl-2-norbornyl methacrylate, 2-ethyl-2-norbornyl methacrylate, 2-isobornyl methacrylate, 2-methyl-2-isobornyl methacrylate, 2-ethyl-2-isobornyl methacrylate, 8-tricyclo [5. 2. 1. 0^{2, 6}] decanyl methacrylate (TCDMA), 8-methyl -8-tricyclo [5. 2. 1. 0^{2, 6}] decanyl methacrylate, 8-ethyl-8-tricyclo [5. 2. 1. 0^{2, 6}] decanyl methacrylate, 2-adamantyl methacrylate, 2-methyl-2-adamantyl methacrylate, 2-ethyl-2-adamantyl methacrylate, 1-adamantyl methacrylate, 2-fenchyl methacrylate, 2-methyl-2-fenchyl methacrylate, and 2-ethyl-2-fenchyl methacrylate. Among them, a methacrylic acid polycyclic aliphatic hydrocarbon ester is preferred, and 8-tricyclo [5. 2. 1. 0^{2, 6}] decanyl methacrylate (TCDMA) is more preferred.

As the methacrylic resin (B), a methacrylic resin (BX) containing a structural unit derived from MMA and a methacrylic acid polycyclic aliphatic hydrocarbon ester is more preferred. Further a methacrylic resin (BX-a) containing a structural unit derived from MMA and 8-tricyclo [5. 2. 1. 0^{2, 6}] decanyl methacrylate (TCDMA) is particularly preferred.

In view of hardness, the amount of an MMA monomer unit contained in the methacrylic resin (B) is preferably 40 to 80 mass%, more preferably 50 to 80 mass%, and particularly preferably 50 to 60 mass%.

In order to reduce a linear expansion rate ratio (SR) (which will be described later) and to increase a glass transition temperature (Tg(M)) to 110°C or higher, the amount of the methacrylic acid ester (I) monomer unit contained in the methacrylate resin (B) is preferably 20 to 60 mass%, more preferably 20 to 50 mass%, and particularly preferably 40 to 50 mass%. When the amount of the methacrylic acid ester (I) monomer unit is larger than 60 mass%, impact resistance of the methacrylic-resin containing layer may deteriorate.

### <Methacrylic Resin Composition (MR)>

In another embodiment according to the present invention, the methacrylic-resin containing layer may include a methacrylic resin composition (MR) (hereinafter, also simply referred to as a resin composition (MR)) containing a methacrylic resin (IV) and an SMA resin.

In this specification, the "SMA resin" is a copolymer containing a structural unit derived from at least one type of an aromatic vinyl compound (II), a structural unit derived from at least one type of an acid anhydride (III) including maleic anhydride (MAH), and more preferably a structural unit derived from MMA.

The methacrylic resin composition (MR) may preferably contain 5 to 80 mass% of a methacrylic resin (IV) and 95 to 20 mass% of an SMA resin.

The methacrylic resin (IV) is preferably a homopolymer or a copolymer containing a structural unit derived from at least one type of a methacrylic acid ester including MMA. There is no particular limitation on the methacrylic acid ester. In view of availability, MMA, ethyl methacrylate, n-propyl methacrylate, isopropyl methacrylate, n-butyl methacrylate, isobutyl methacrylate, and tert-butyl methacrylate are preferred. Further, MMA is particularly preferred. The amount of a methacrylic acid ester monomer unit contained in the methacrylic resin (IV) is preferably 90 mass% or larger, more preferably 95 mass% or larger, and particularly preferably 98 mass% or larger, or may be 100 mass%.

The methacrylic resin (IV) is preferably a methacrylic resin (A) containing an MMA monomer unit. The amount of the MMA monomer unit contained in the methacrylic resin (A) is preferably 90 mass% or larger, more preferably 95 mass% or larger, particularly preferably 98 mass% or larger, and most preferably 100 mass%.

The methacrylic resin (IV) may contain a structural unit derived from at least one type of a monomer other than the methacrylic acid ester. As the other monomer(s), those described above in the description of the methacrylic resin (PM) may be used. The amount of the other monomer unit(s) contained in the methacrylic resin (IV) is preferably 10 mass% or smaller, more preferably 5 mass% or smaller, and particularly preferably 2 mass% or smaller.

In order to increase the glass transition temperature (Tg(M)) to 110°C or higher, the amount of the methacrylic resin (IV) contained in the resin composition (MR) is preferably 80 mass% or smaller, more preferably 5 to 55 mass%, and particularly preferably 10 to 50 mass%.

The SMA resin is a copolymer containing a structural unit derived from at least one type of an aromatic vinyl compound (II) and at least one type of an acid anhydride (III) including MAH.

Examples of the aromatic vinyl compound (II) include styrene (St); nucleus alkyl-substituted styrene such as 2-methylstyrene, 3-methylstyrene, 4-methylstyrene, 4-ethylstyrene, and 4-tert-butylstyrene; and α-alkyl-substituted styrene such as α-methylstyrene and 4-methyl-α-methylstyrene. Among them, styrene (St) is preferred in view of availability. In view of transparency and moisture resistance of the resin composition (MR), the amount of the aromatic vinyl compound (II) monomer unit contained in the SMA resin is preferably 50 to 85 mass%, more preferably 55 to 82 mass%, and particularly preferably 60 to 80 mass%.

As the acid anhydride (III), at least maleic anhydride (MAH) may be used in view of availability. Further, other acid anhydrides such as citraconic anhydride and dimethyl maleic anhydride may be used as required. In view of transparency and heat resistance of the resin composition (MR), the amount of the acid anhydride (III) monomer unit contained in the SMA resin is preferably 15 to 50 mass%, more preferably 18 to 45 mass%, and particularly preferably 20 to 40 mass%.

The SMA resin may contain a structural unit derived from at least one type of a methacrylic acid ester monomer in addition to the aromatic vinyl compounds (II) and the acid anhydride (III). Examples of the methacrylic acid ester include MMA, ethyl methacrylate, propyl methacrylate, isopropyl methacrylate, n-butyl methacrylate, isobutyl methacrylate, t-butyl methacrylate, 2-ethylhexyl methacrylate, cyclohexyl methacrylate, phenyl methacrylate, benzyl methacrylate, and 1-phenylethyl methacrylate. Among them, a methacrylic acid alky ester of which the carbon number of an alkyl group is 1 to 7 is preferred. In view of heat resistance and transparency of the SMA resin, MMA is particularly preferred. In view of bending workability and transparency of the extruded resin plate, the amount of the methacrylic acid ester monomer unit contained in the SMA resin is preferably 1 to 35 mass%, more preferably 3 to 30 mass%, and particularly preferably 5 to 26 mass%. In such cases, the amount of the contained aromatic vinyl compound (II) monomer unit is preferably 50 to 84 mass%, and the amount of the contained acid anhydride (III) monomer unit is preferably 15 to 49 mass%.

The SMA resin may have a structural unit derived from a monomer(s) other than the aromatic vinyl compounds (II), the acid anhydrides (III), and the methacrylic acid ester. As the other monomer(s), those described above in the description of the methacrylic resin (PM) may be used. The amount of the other monomer unit(s) contained in the SMA resin is preferably 10 mass% or smaller, more preferably 5 mass% or smaller, and particularly preferably 2 mass% or smaller.

The SMA resin is obtained by polymerizing the aromatic vinyl compound (II), the acid anhydride (III), optionally the methacrylic acid ester, and optionally other monomers. In this polymerization, the polymerization itself is usually performed after preparing a monomer mixture by mixing a plurality of types of monomers. The polymerization method is not limited to any particular methods. In view of productivity, a radical polymerization method such as a bulk polymerization method and a solution polymerization method is preferred.

The molecular weight Mw of the SMA resin is preferably 40,000 to 300,000. When the molecular weight Mw is 40,000 or higher, the methacrylic-resin containing layer has excellent abrasion resistance and excellent impact resistance. Further, when the molecular weight Mw is 300,000 or lower, the methacrylic-resin containing layer has excellent moldability.

In order to reduce the linear expansion rate ratio (SR) (which will be described later) and to increase the glass transition temperature (Tg(M)) to 110°C or higher, the amount of the SMA resin contained in the resin composition (MR) is preferably 20 mass% or larger, more preferably 45 to 95 mass%, and particularly preferably 50 to 90 mass%.

The resin composition (MR) is obtained, for example, by mixing the methacrylic resin (IV) and the SMA resin. Examples of the mixing method include a melt mixing method and a solution mixing method. In the melt mixing method, melt-kneading may be performed under an atmosphere of an inert gas such as a nitrogen gas, an argon gas, and a helium gas as required by using a melt-kneader such as a uniaxial or multi-axial kneader, an open roll, a Banbury mixer, and a kneader. In the solution mixing method, the methacrylic resin (IV) and the SMA resin may be mixed by dissolving them in an organic solvent such as toluene, tetrahydrofuran, and methyl ethyl ketone.

The methacrylic-resin containing layer may contain the methacrylic resin (PM) and optionally at least one type of other polymers.

In one embodiment, the methacrylic-resin containing layer may contain the methacrylic resin (B) and optionally at least one type of other polymers.

In another embodiment, the methacrylic-resin containing layer may be composed of the methacrylic resin composition (MR). Further, the methacrylic resin composition (MR) may contain the methacrylic resin (IV), the SMA resin, and optionally at least one type of other polymers.

There is no particular limitation on the other polymer(s). Examples of the other polymer(s) include other thermoplastic resins such as polyolefin such as polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins. The amount of the other polymer(s) contained in the methacrylic-resin containing layer is preferably 10 mass% or smaller, more preferably 5 mass% or smaller, and particularly preferably 2 mass% or smaller.

The methacrylic-resin containing layer may contain various additives as required. Examples of the additives include antioxidants, thermal degradation preventing agents, ultraviolet absorbers, light stabilizers, lubricants, mold release agents, polymer processing aids, antistatic agents, flame retardants, dyes/pigments, light diffusing agents, matting agents, impact modifiers such as core-shell particles and block copolymers, and phosphors. The amount of the additive(s) may be determined as appropriate as long as the effect of the present invention is not impaired. For example, based on 100 pts.mass of the resin constituting the methacrylic-resin containing layer, the amount of an antioxidant is preferably 0.01 to 1 pts.mass; the amount of an ultraviolet absorber is preferably 0.01 to 3 pts.mass; the amount of a light stabilizer is preferably 0.01 to 3 pts.mass; the amount of a lubricant is preferably 0.01 to 3 pts.mass; and the amount of a dye/pigment is preferably 0.01 to 3 pts.mass.

When other polymers and/or additives are contained in the methacrylic resin (PM) or the methacrylic resin (B), they may be added during or after the polymerization of the methacrylic resin (PM) or the methacrylic resin (B). When other polymers and/or additives are contained in the methacrylic resin composition (MR), they may be added during the polymerization of the methacrylic resin (IV) and/or the SMA resin, or during or after the mixing of these resins.

In view of stability of heat-melt molding, the melt flow rate (MFR) of the resin constituting the methacrylic-resin containing layer is preferably 1 to 10 g/10 minutes, more preferably 1.5 to 7 g/10 minutes, and particularly preferably 2 to 4 g/10 minutes. In this specification, the MFR of the resin constituting the methacrylic-resin containing layer is a value that is measured at a temperature of 230°C under a load of 3.8 kg by using a melt indexer unless otherwise specified.

### (Polycarbonate Containing Layer)

The polycarbonate containing layer contains at least one type of polycarbonates (PC). The polycarbonate (PC) is preferably obtained by copolymerizing at least one type of divalent phenol and at least one type of a carbonate precursor. Examples of the manufacturing method include an interfacial polymerization method in which an aqueous solution of divalent phenol and an organic solvent solution of a carbonate precursor are reacted at the interface, and a transesterification method in which divalent phenol and a carbonate precursor are reacted at a high temperature under a reduced pressure under a solvent-free condition.

Examples of the divalent phenol include 2,2-bis (4-hydroxyphenyl) propane (commonly known as bisphenol A), 1,1-bis (4-hydroxyphenyl) ethane, 1,1-bis (4-hydroxyphenyl) cyclohexane, 2,2-bis (3-methyl-4-hydroxyphenyl) propane, 2,2-bis (3,5-dimethyl-4-hydroxyphenyl) propane, bis (4-hydroxyphenyl) sulfide, and bis (4-hydroxyphenyl) sulfone. Among them, bisphenol A is preferred. Examples of the carbonate precursor include carbonyl halide such as phosgene; carbonate esters such as diphenyl carbonate; and haloformate such as dihaloformate of divalent phenol.

The molecular weight Mw of the polycarbonate (PC) is preferably 10,000 to 100,000, and more preferably 20,000 to 70,000. When the molecular weight Mw is 10,000 or higher, the polycarbonate containing layer has excellent impact resistance and excellent heat resistance. Further, when the molecular weight Mw is 100,000 or lower, the polycarbonate containing layer has excellent moldability.

Commercially available polycarbonate products may be used as the polycarbonate (PC). Examples include "Caliber (Registered Trademark)" and "SD Polyca (Registered Trademark)" manufactured by Sumika Styron Polycarbonate Limited, "Eupilon/Novarex (Registered Trademark)" manufactured by Mitsubishi Engineering Plastics Corporation "Taflon (Registered Trademark)" manufactured by Idemitsu Kosan Co., Ltd., and "Panlite (Registered Trademark)" manufactured by Teijin Chemicals Ltd.

The polycarbonate containing layer may include at least one type of other polymers and/or various additives as required. As the other polymers and various additives, polymers and various additives similar to those described above in the description of the methacrylic-resin containing layer may be used. The amount of the other polymer(s) contained in the polycarbonate containing layer is preferably 15 mass% or smaller, more preferably 10 mass% or smaller, and particularly preferably 5 mass% or smaller. The amount of the additive(s) may be determined as appropriate as long as the effect of the present invention is not impaired. Based on 100 pts.mass of the polycarbonate (PC), the amount of an antioxidant is preferably 0.01 to 1 pts.mass; the amount of an ultraviolet absorber is preferably 0.01 to 3 pts.mass; the amount of a light stabilizer is preferably 0.01 to 3 pts.mass; the amount of a lubricant is preferably 0.01 to 3 pts.mass; and the amount of a dye/pigment is preferably 0.01 to 3 pts.mass.

When other polymers and/or additives are added in the polycarbonate (PC), they may be added during or after the polymerization of the polycarbonate (PC).

In this specification, the glass transition temperature of the polycarbonate containing layer is represented by Tg(PC). The glass transition temperature Tg(PC) is preferably 120 to 160°C, more preferably 135 to 155°C, and particularly preferably 140 to 150°C.

In view of stability of heat-melt molding, the MFR of the resin constituting the polycarbonate containing layer is preferably 1 to 30 g/10 minutes, more preferably 3 to 20 g/10 minutes, and particularly preferably 5 to 10 g/10 minutes. In this specification, the MFR of the resin constituting the polycarbonate containing layer is a value that is measured at a temperature of 300°C under a load of 1.2 kg by using a melt indexer unless otherwise specified.

### (Linear Expansion Rate Ratio (SR))

In the extruded resin plate according to the present invention, a ratio ((S2-S1)/S1) which is composed of a difference (S2-S1) between a linear expansion rate (S1) of the polycarbonate containing layer and a linear expansion rate (S2) of the methacrylic-resin containing layer, and the linear expansion rate (S1) of the polycarbonate containing layer is defined as a linear expansion rate ratio (SR).

In order to reduce warping caused by a thermal change or the like, the linear expansion rate ratio (SR) is from -10% to +10%, preferably from -10% to +5%, and more preferably from -5% to +2%. The linear expansion rate ratio (SR) may be from -10% to -0.1%, from -5% to -0.1%, from +0.1% to +10%, from +0.1% to +5%, or from +0.1% to +2%. When the linear expansion rate ratio (SR) is within the above-described range, it is easy to obtain an extruded resin plate having excellent surface quality and being less prone to warping caused by a residual stress.

### (Thickness of Each Layer and Extruded Resin Plate)

In order to achieve an excellent balance between abrasion resistance and impact resistance, the thickness of the methacrylic-resin containing layer is preferably 20 to 200 µm, more preferably 25 to 150 µm, and particularly preferably 30 to 100 µm. Further, the thickness of the polycarbonate containing layer is preferably 0.1 to 3.0 mm and more preferably 0.5 to 2.0 mm.

There is no particular limitation on the overall thickness of the extruded resin plate according to the present invention. The overall thickness is preferably 0.1 to 3.0 mm and more preferably 0.5 to 2.0 mm when the extruded resin plate is used for a protective plate or the like for a liquid crystal display, a touch panel display or the like. If the extruded resin plate is too thin, the rigidity thereof may be insufficient. Further, if the extruded resin plate is too thick, it may hinder the reduction in weight of the liquid crystal display, the touch panel display or the like.

### (Laminated Structure)

An extruded resin plate according to the present invention may include another resin layer(s) as long as the methacrylic-resin containing layer is laminated on at least one surface of the polycarbonate containing layer. Examples of the laminated structure of an extruded resin plate according to the present invention includes: a two-layer structure composed of a polycarbonate containing layer/a methacrylic-resin containing layer; a three-layer structure composed of a methacrylic-resin containing layer/a polycarbonate containing layer/a methacrylic-resin containing layer; a three-layer structure composed of a methacrylic-resin containing layer/polycarbonate containing layer/another resin layer: and a three-layer structure composed of another layer/a methacrylic-resin containing layer/a polycarbonate containing layer.

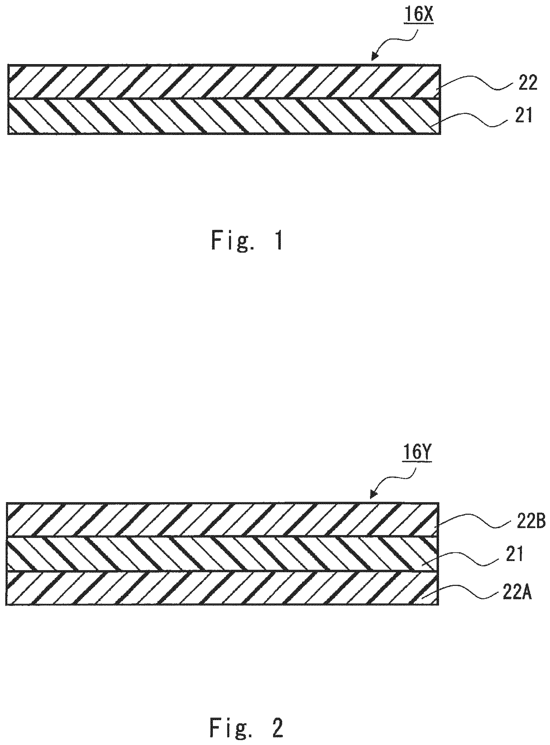

Figs. 1 and 2 are schematic cross sections of extruded resin plates according first and second embodiments of the present invention. In the figures, symbols 16X and 16Y indicate extruded resin plates; symbols 21 indicate polycarbonate containing layers; and symbols 22, 22A and 22B indicate methacrylic-resin containing layers. The extruded resin plate 16X according to the first embodiment has a two-layer structure composed of a polycarbonate containing layer 21/a methacrylic-resin containing layer 22. The extruded resin plate 16Y according to the second embodiment has a three-layer structure composed of a first methacrylic-resin containing layer 22A/a polycarbonate containing layer 21/a second methacrylic-resin containing layer 22B. Note that the structure of the extruded resin plate may be changed as desired.

### (Cured Film)

An extruded resin plate according to the present invention may include a cured film on at least one outermost surface thereof as required. The cured film can function as an abrasion resistant layer or a low reflective layer for improving visibility. The cured film may be formed by a known method (see Patent Literatures 5 and 6 and the like mentioned in the "Background Art" section).

The thickness of the cured film having an abrasion resistant property (a hard coat property) (i.e., the abrasion resistant layer) is preferably 2 to 30 µm and more preferably 5 to 20 µm. If the cured film is too thin, the surface hardness is insufficient. Further, if the cured film is too thick, cracks may occur due to bending that is performed during the manufacturing process.

The thickness of the low-reflectivity cured film (the low-reflective layer) is preferably 80 to 200 nm and more preferably 100 to 150 nm. If the cured film is too thin or too thick, its low reflection performance may become unsatisfactory.

### [Method for Manufacturing Extruded Resin Plate]

A method for manufacturing an extruded resin plate having the above-described structure according to the present invention is described hereinafter. An extruded resin plate according to the present invention is manufactured by a manufacturing method including coextrusion molding.

### (Step (X))

Each of resins constituting a polycarbonate containing layer and a methacrylic-resin containing layer is heated and melted. Then, they are coextruded from a T-die having a wide discharge port in a molten state in a state of a thermoplastic resin laminate in which the methacrylic-resin containing layer is laminated on at least one surface of the polycarbonate containing layer.

The molten resins for the polycarbonate containing layer and the methacrylic-resin containing layer are preferably filtered in the molten state by using a filter before they are laminated. By molding these molten resins, which has been filtered in the molten state, into multiple layers, it is possible to obtain an extruded resin plate having few defects caused by foreign substances or gels. The filter material of the filter is selected as appropriate according to the use temperature, the viscosity, and the accuracy of the filtration. Examples of the filter material include a nonwoven fabric composed of polypropylene, polyester, rayon, cotton, glass fibers, or the like; a sheet-like element made of phenolic-resin impregnated cellulose; a sintered sheet-like element of a metal-fiber nonwoven fabric; a sintered sheet-like element of metal powder; wire gauze; and a combination thereof. Among them, in view of heat resistance and durability, a filter in which a plurality of sintered sheet-like elements of metal-fiber nonwoven fabric are laminated is preferred. There is no particular limitation on the filtration accuracy of the filter. The filtration accuracy is preferably 30 µm or lower, more preferably 15 µm or lower, and particularly preferably 5 µm or lower.

Examples of the lamination method include a feed block method in which resins are laminated before being fed to a T-die, and a multi-manifold method in which resins are laminated inside a T-die. In order to improve smoothness of the interface between the layers of the extruded resin plate, the multi-manifold method is preferred.

The molten thermoplastic resin laminate coextruded from the T-die is cooled by using a plurality of cooling rolls. In the present invention, the molten thermoplastic resin laminate is cooled by using at least three cooling rolls arranged adjacent to each other by repeating the following operation a plurality of times from n=1 (n≥1), i.e., the operation including sandwiching the thermoplastic resin laminate between an nth cooling roll and an (n+1)th cooling roll, and winding the thermoplastic resin laminate around the (n+1)th cooling roll. For example, when three cooling rolls are used, the number of repetitions is two.

Examples of the cooling rolls include a metal roll, and an elastic roll including a metal thin film on its outer periphery (hereinafter, also referred to as a metal elastic roll). Examples of the metal roll include a drilled roll and a spiral roll. The surface of the metal roll may be a mirror surface, or may have a pattern, unevenness, or the like. The metal elastic roll may include, for example, a shaft roll made of stainless steel or the like, a metal thin film made of stainless steel or the like and covering the outer peripheral surface of the shaft roll, and a fluid contained between the shaft roll and the metal thin film. Because of the presence of the fluid, the metal elastic roll can have elasticity. The thickness of the metal thin film is preferably about 2 to 5 mm. The metal thin film preferably has a bending property and flexibility, and preferably has a seamless structure with no welding joint. Such a metal elastic roll including a metal thin film has excellent durability. Further, such a metal elastic roll may be easily used because, by making its metal thin film have a mirror surface, it can be handled in the same manner as an ordinary mirror surface roll. Alternatively, by providing a pattern, unevenness, or the like on the metal thin film, it becomes a roll that can transfer the pattern, the unevenness, or the like.

The extruded resin plate obtained after the cooling is pulled out by take-off rolls. The above-described coextruding, cooling, and pulling-out steps are performed in a continuous manner. Note that in this specification, in general, a material in a heated and melted state is expressed as a "thermoplastic resin laminate" and a solidified material is expressed as an "extruded resin plate". However, there is no clear boundary between them.

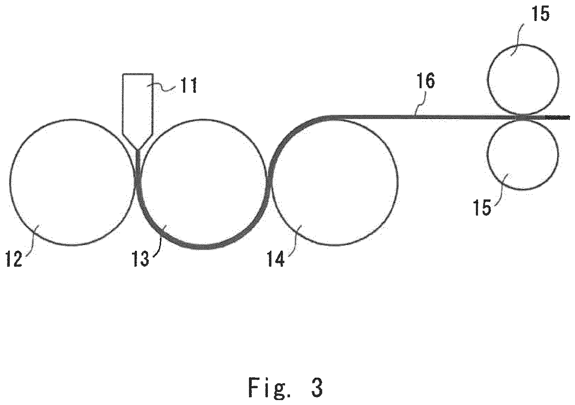

As an embodiment, Fig. 3 shows a schematic diagram of a manufacturing apparatus including a T-die 11, first to third cooling rolls 12 to 14, and a pair of take-off rolls 15. A thermoplastic resin laminate coextruded from the T-die 11 is cooled by using the first to third cooling rolls 12 to 14 and pulled out by the pair of take-off rolls 15. In the example shown in Fig. 3, the third cooling roll 14 is the "last cooling roll around which the thermoplastic resin laminate is wound (hereinafter also simply referred to as the last cooling roll)".

A fourth cooling roll and a subsequent cooling roll(s) may be disposed behind and adjacent to the third cooling roll 14. In such a case, the cooling roll on which the thermoplastic resin laminate is wound last becomes the "last cooling roll". Note that a conveying roll(s) may be disposed between the plurality of cooling rolls adjacent to each other and the take-off roll as desired. However, the conveying roll(s) is not included in the "cooling rolls".

In the manufacturing method according to the present invention, the overall temperature of the thermoplastic resin laminate at the time when the thermoplastic resin laminate is sandwiched between the second and third cooling rolls (TX) is adjusted to a temperature at least 10°C higher than the glass transition temperature of the polycarbonate containing layer (Tg(PC)). Note that the temperature (TX) is measured by a method described in the [EXAMPLE] section shown later.

In the manufacturing method according to the present invention, the overall temperature of the thermoplastic resin laminate at the place where the thermoplastic resin laminate is separated from the last cooling roll (in Fig. 3, the third cooling roll) (TT) is adjusted to a temperature range between a temperature 2°C lower than the glass transition temperature of the polycarbonate containing layer (Tg(PC)) and a temperature 19°C higher than the glass transition temperature thereof. The temperature (TT) is preferably between a temperature 2°C lower than the glass transition temperature (Tg(PC)) and a temperature 0.1°C lower than the Tg(PC) or between a temperature 0.1°C higher than the Tg(PC) and a temperature 19°C higher than the Tg(PC), more preferably between a temperature 2°C lower than the Tg(PC) and a temperature 15°C higher than the Tg(PC), particularly preferably between a temperature 0.1°C higher than the Tg(PC) and a temperature 15°C higher than the Tg(PC). If the temperature TT is too low relative to the glass transition temperature Tg(PC), the shape on the last cooling roll (in Fig. 3, the third cooling roll) may be transferred onto the extruded resin plate and warping thereof may increase. On the other hand, if the temperature TT is too high relative to the glass transition temperature (Tg) of the resin layer that is in contact with the last cooling roll (in Fig. 3, the third cooling roll), the surface quality of the extruded resin plate may deteriorate. Note that the temperature (TT) is measured by a method described in the [EXAMPLE] section shown later.

In the present invention, in order to obtain an extruded resin plate having no or small warping, the linear expansion rate ratio (SR) is preferably adjusted to -10% to +10% and the glass transition temperature (Tg(M)) of the methacrylic-resin containing layer is preferably adjusted to 110°C or higher.

The term "retardation" means a phase difference between light in the direction of the molecular main chain and light in the direction perpendicular thereto. In general, a polymer can have an arbitrary shape as it is heat-melt molded. However, it is known that molecules are oriented by a stress that occurs during the heating and cooling processes and hence retardation occurs. Therefore, in order to control the retardation, it is necessary to control the orientation of molecules. Molecules are orientated, for example, by a stress that occurs when the polymer is molded at or near its glass transition temperature (Tg). Note that in this specification, the term "retardation" means in-plane retardation unless otherwise specified.

The present inventors have found that it is possible to optimize an Re value of a molded extruded resin plate by optimizing manufacturing conditions and thereby controlling the orientation of molecules in the extrusion molding process, and also to suppress thermal changes in the Re value by doing so.

Note that although their details will be described later, the Re value of at least a part of the extruded resin plate in the width direction is preferably 50 to 330 nm both before and after the heating, and a decreasing rate of the Re value of the extruded resin plate after the heating to the decreasing rate thereof before the heating is 30% or lower.

### <Relation between Circumferential Speed Ratio and Re Value>

In this specification, the "circumferential speed ratio" means a ratio of the circumferential speed of a given cooling roll other than the second cooling roll, or the take-off roll to that of the second cooling roll. The circumferential speed of the second cooling roll is represented by V2; the circumferential speed of the third cooling roll is represented by V3; and the circumferential speed of the take-up roll is represented by V4.

The present inventors have evaluated the relation between the circumferential speed ratio (V3/V2) of the third cooling roll to the second cooling roll and the Re value in various cases. As a result of these evaluations, the present inventors have found that the Re value does not significantly increase even when the circumferential speed ratio (V3/V2) is increased. The probable reason for this phenomenon is as follows.

In the manufacturing method according to the present invention, the overall temperature of the thermoplastic resin laminate at the place where the thermoplastic resin laminate is separated from the last cooling roll (in Fig. 3, the third cooling roll) (TT) is adjusted to a temperature range between a temperature 2°C lower than the glass transition temperature of the polycarbonate containing layer (Tg(PC)) and a temperature 19°C higher than the glass transition temperature thereof. Here, we focus attention on the cooling process of the thermoplastic resin laminate performed by the last cooling roll. Since the thermoplastic resin laminate is cooled while it is in contact with the last cooling roll, the overall temperature of the thermoplastic resin laminate in the place where it makes initial contact with the last cooling roll is higher than the overall temperature of the thermoplastic resin laminate in the place where it is separated from the last cooling roll (TT). Therefore, the overall temperature of the thermoplastic resin laminate at the time when it makes initial contact with the last cooling roll is higher than the temperature range between the temperature 2°C lower than the glass transition temperature of the polycarbonate containing layer (Tg(PC)) and the temperature 19°C higher than the glass transition temperature thereof. For example, the overall temperature of the thermoplastic resin laminate at that time point is about +20°C higher than the glass transition temperature (Tg(PC)) or higher. It is inferred that even if the circumferential speed ratio (V3/V2) is increased and hence a large tensile stress is exerted to the extruded resin plate under the above-described conditions, the Re value does not significantly increase because the extruded resin plate is in a high temperature range in which molecules of the resin are less likely to be oriented.

The present inventors have evaluated the relation between the circumferential speed ratio (V4/V2) of the take-off roll to the second cooling roll and the Re value in various cases. As a result of these evaluations, the present inventors have found that the Re value increases as the circumferential speed ratio (V4/V2) is increased. The probable reason for this phenomenon is as follows.

It is inferred that when the circumferential speed ratio of the take-off roll is increased and hence a large tensile stress is exerted to the extruded resin plate under the condition that the temperature (TT) is adjusted to the temperature range between the temperature 2°C lower than the glass transition temperature of the polycarbonate containing layer (Tg(PC)) and the temperature 19°C higher than the glass transition temperature thereof, the Re value increases because the extruded resin plate is in a temperature range in which molecules of the resin are easily oriented.

### <Relation between Circumferential Speed Ratio and Decreasing Rate of Re value after Heating>

It has been found that when the circumferential speed ratio (V4/V2) is increased under the condition that the temperature (TT) is lower than the temperature range between the temperature 2°C lower than the glass transition temperature of the polycarbonate containing layer (Tg(PC)) and the temperature 19°C higher than the glass transition temperature thereof, the Re value tends to increase and the decreasing rate of the Re value after the heating tends to increase (see Comparative Examples 1 and 2 shown later).

It has also been found that on the other hand, when the circumferential speed ratio (V4/V2) is increased under the condition that the temperature (TT) is in the temperature range between the temperature 2°C lower than the glass transition temperature of the polycarbonate containing layer (Tg(PC)) and the temperature 19°C higher than the glass transition temperature thereof, the decreasing rate of the Re value after the heating does not significantly change though the Re value itself increases (see Examples 10 and 11 shown later).

The probable reason for this phenomenon is as follows. It is inferred as follows: in the case where the temperature (TT) is adjusted to the temperature range between the temperature 2°C lower than the glass transition temperature of the polycarbonate containing layer (Tg(PC)) and the temperature 19°C higher than the glass transition temperature thereof, as the circumferential speed ratio of the take-off roll is increased and hence a large tensile stress is exerted to the extruded resin plate, molecules are oriented and hence the Re value increases; however, since the heating temperature is lower than the glass transition temperature of the polycarbonate containing layer (Tg(PC)), the orientation of the molecules is less likely to be eased and hence the decreasing rate of the Re value does not significantly change.

From the above-described findings, it has been found that it is possible to control the Re value and the decreasing rate of the Re value after the heating by controlling the temperature (TT) to the temperature range between the temperature 2°C lower than the glass transition temperature of the polycarbonate containing layer (Tg(PC)) and the temperature 19°C higher than the glass transition temperature thereof and adjusting the circumferential speed ratio (V4/V2) to a suitable range.

Specifically, in the manufacturing method according to the present invention, the circumferential speed ratio (V4/V2) is adjusted to a value no lower than 0.98 and lower than 1.0. If the circumferential speed ratio (V4/V2) is 1.0 or higher, the Re value may exceed 330 nm (see Comparative Examples 5 to 7 shown later). If the circumferential speed ratio (V4/V2) is lower than 0.98, the Re may become lower than 50 nm (see a Comparative Example 8 shown later). In order to optimize the Re value, the circumferential speed ratio (V4/V2) is more preferably between 0.985 and 0.995 (see Examples 1-10 and 12-15 shown later).

### <Regarding Change of Axial Direction of In-plane Retardation>

The axial direction of in-plane retardation is dependent on the direction of the orientation of molecules. Note that when the photoelastic coefficient of a resin is positive, its fast axis is in a direction perpendicular to the direction of the molecular orientation and its slow axis is in a direction parallel to the direction of the molecular orientation. On the contrary, when the photoelastic coefficient of the resin is negative, its slow axis is in the direction perpendicular to the direction of the molecular orientation and its fast axis is in the direction parallel to the direction of the molecular orientation. That is, the fast and slow axes are perpendicular to each other. Further, the direction of the molecular orientation is dependent on the tensile direction and, in general, the fast or slow axis is in a direction parallel to the extruding direction.

The present inventors evaluated visibility of samples of extruded resin plates that were cut in a direction perpendicular to the extruding direction when a liquid crystal display in which the transmission axis of a polarizer is horizontal with respect to an observation screen is viewed through a polarizing filter (such as polarized sunglasses).

The present inventors have found that when the circumferential speed ratio (V4/V2) is lower than 1.0 under manufacturing conditions in which the temperature (TX) is at least 10°C higher than the Tg(PC) and the temperature (TT) is in a range between a temperature 2°C lower than the Tg(PC) and a temperature 19°C higher than the Tg(PC), the axial direction of the in-plane retardation is not parallel to the extruding direction (i.e., deviates from the extruding direction.). Specifically, the present inventors have found that the angle of the slow or fast axis of the in-plane retardation deviates from the extruding direction by 5° or larger, and that the visibility becomes excellent when the liquid crystal display is viewed under the above-described evaluation conditions. It is inferred that under these manufacturing conditions, a stress in a direction perpendicular to the extruding direction (i.e., in a width direction) is added and hence the axial direction of the in-plane retardation changes.

In contrast to this, the present inventors have also found that: under the same manufacturing conditions (i.e., the manufacturing conditions in which the temperature (TX) is at least 10°C higher than the Tg(PC) and the temperature (TT) is in the temperature range between the temperature 2°C lower than the Tg(PC) and the temperature 19°C higher than the Tg(PC)), when the circumferential speed ratio (V4/V2) is 1.0 or higher, the angle of the slow or fast axis of the in-plane retardation becomes zero or close to zero, i.e., becomes 5° or smaller with respect to the extruding direction; and therefore when the liquid crystal display is viewed under the above-described evaluation conditions, the visibility deteriorates. It is estimated even under these manufacturing conditions, a stress in the width direction is added. However, it is inferred that: since the circumferential speed ratio (V4/V2) is large, i.e., is 1.0 or larger, the stress in the extruding direction significantly increases; therefore, the influence of the stress in the width direction becomes smaller.

Further, the present inventors have also found that: under manufacturing conditions different from the above-described manufacturing conditions, for example, under conditions in which the temperature (TT) is lower than the temperature range between the temperature 2°C lower than the Tg(PC) and the temperature 19°C higher than the Tg(PC), even when the circumferential speed ratio (V4/V2) is adjusted to 1.0 or lower, the angle of the slow or fast axis of the in-plane retardation becomes zero or close to zero, i.e., becomes 5° or smaller with respect to the extruding direction; and therefore when the liquid crystal display is viewed under the above-described evaluation conditions, the visibility deteriorates.

### <In-plane Retardation (Re) Value>

There is no particular limitation on the Re value of the extruded resin plate. In the case where the extruded resin plate is used for a protective plate of a liquid crystal display, a touch panel or the like, when the Re value is larger than 330 nm, a difference in transmittance at each wavelength in the visible light range becomes large when it is viewed through a polarizing filter such as polarized sunglasses. Therefore, there is a possibility that various colors are seen and the visibility deteriorates. Further, when the Re value is smaller than 50 nm, there is a possibility that transmittance at all wavelengths in the visible light range is lowered and hence the visibility deteriorates. In view of visibility, the Re value is preferably 50 to 330 nm. In this range, there is the following tendency. That is, brightness increases as the value increases and colors become sharper as the value decreases. In view of the balance between the brightness and the colors, the Re value is more preferably 80 to 250 nm. Note that the Re value of at least a part of the extruded resin plate in the width direction is preferably 50 to 330 nm and more preferably 80 to 250 nm.

### <Heating Condition>

The heating conditions for evaluating the decreasing rate of the Re value of the extruded resin plate may be as follows: a constant temperature within a range of 75 to 100°C and a constant time within a range of 1 to 30 hours. For example, an evaluation may be made under the condition of 75°C and 5 hours, or 100°C and 5 hours. For example, an evaluation may be made by heating a test piece for 5 hours in an oven whose temperature is maintained at 100°C ±3°C or 75°C ±3°C. Note that in the above-described heating condition, the heating temperature and the heating time in an ordinary process for forming a cured film are taken into consideration. Therefore, it is preferred that the Re value can be maintained within a suitable range when an evaluation is made by performing heating under the above-described conditions.

According to the manufacturing method in accordance with the present invention, it is possible to manufacture an extruded resin plate in which: when the angle of an axis parallel to the extruding direction is defined as 0°, the absolute value of the angle of the slow or fast axis of the in-plane retardation is 5 to 45°; the glass transition temperature Tg(M) of the methacrylic-resin containing layer is 110°C or higher; when the extruded resin plate is heated for 5 hours at a constant temperature within a range of 75 to 100°C, the Re value of at least a part of the extruded resin plate in the width direction is 50 to 330 nm and preferably 80 to 250 nm both before and after the heating; and the decreasing rate of the retardation value after the heating to the decreasing rate thereof before the heating is 30% or lower and preferably 15% or lower.

### (Step (Y))

In the manufacturing method according to the present invention, in order to provide the above-described characteristics more stably and thereby to obtain an extruded resin plate suitable as a protective plate or the like for a liquid crystal display, a touch panel, or the like more stably, it is possible to perform, after the step (X), a step (Y) in which the extruded resin plate is heated at a temperature of 65 to 110°C for 1 to 30 hours.

In this case, preferably, when the angle of an axis parallel to the extruding direction is defined as 0°, the absolute value of the angle of the slow or fast axis of the in-plane retardation of the extruded resin plate before the step (Y) is 5 to 45°; the Re value of at least a part of the extruded resin plate in the width direction is 50 to 330 nm and preferably 80 to 250 nm both before and after the step (Y); and the decreasing rate of the Re value of the extruded resin plate after the step (Y) to the decreasing rate thereof before the step (Y) is 30% or lower and preferably 15% or lower.

As described above, according to the present invention, it is possible to provide an extruded resin plate which is less prone to warping caused by a thermal change, has a suitable in-plane retardation (Re) value and a suitable axial direction of in-plane retardation, and has excellent surface quality, and provide a method for manufacturing such an extruded resin plate.

The extruded resin plate according to the present invention is excellent in luster, abrasion resistance, and impact resistance because the methacrylic-resin containing layer is laminated on at least one surface of the polycarbonate containing layer.

Since the extruded resin plate according to the present invention is less prone to warping caused by a thermal change and thermal changes in its Re value is small, it is resistant to heating and a high-temperature use environment in a process for forming a cured film that functions as an abrasion resistant layer or the like. Therefore, the extruded resin plate is excellent in productivity and durability.

The extruded resin plate according to the present invention is suitable as a protective plate or the like for a liquid crystal display, a touch panel or the like. Further, when the extruded resin plate according to the present invention is used as a protective plate or the like for a liquid crystal display, a touch panel or the like, visibility of a screen is excellent.

### [Use]

The extruded resin plate according to the present invention is suitable as a protective plate or the like for a liquid crystal display, a touch panel or the like. For example, the extruded resin plate is suitable as a protective plate for a liquid crystal display, a touch panel or the like used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems.

### Example

Examples according to the present invention and comparative examples will be described.

### [Evaluation Items and Evaluation Methods]

The evaluation items and the evaluation methods are as follows.

### (Copolymerization Composition of SMA Resin)

Copolymerization composition of an SMA resin was determined by a ¹³C-NMR method by using a nuclear magnetic resonance apparatus ("GX-270" manufactured by JEOL Ltd.) according to the following procedure.

A sample solution was prepared by dissolving 1.5 g of an SMA resin in 1.5 ml of deuterated chloroform and a ¹³C-NMR spectrum was measured in a room-temperature environment under the condition that the number of accumulations was 4,000 to 5,000. As a result, the following values were obtained.
- [Integrated intensity of carbon peak (around 127, 134, 143 ppm) of benzene ring (carbon number 6) in styrene unit]/6
- [Integrated intensity of carbon peak (around 170 ppm) at carbonyl site (carbon number 2) in maleic anhydride unit]/2
- [Integrated intensity of carbon peak (around 175 ppm) at carbonyl site (carbon number 1) in MMA unit]/1

From the area ratio among the above-shown values, a molar ratio among the styrene unit, the maleic anhydride unit, and the MMA unit in the sample was determined. The mass composition of each monomer unit in the SMA resin was determined from the obtained molar ratio and the mass ratio of that monomer unit (styrene unit: maleic anhydride unit: MMA unit = 104: 98: 100).

### (Weight Average Molecular Weight (Mw))

The molecular weight Mw of the resin was determined by a GPC method according to the following procedure. Tetrahydrofuran was used as an eluent. Further, two "TSKgel SuperMultipore HZM-M" and one "SuperHZ4000" manufactured by Tosoh Corporation were connected in series and used as a column. HLC-8320 (product number) equipped with a differential refractive index detector (an RI detector) manufactured by Tosoh Corporation was used as a GPC apparatus. A sample solution was prepared by dissolving 4 mg of a resin in 5 ml of tetrahydrofuran. The temperature of a column oven was set to 40°C. Further, a chromatogram was measured by injecting 20 µl of the sample solution at the rate of 0.35 ml/min as an eluent flow. Ten samples of polystyrene standards having molecular weights in a range of 400 to 5,000,000 were measured by the GPC and a calibration curve indicating a relation between retention time and molecular weights was created. The molecular weight Mw was determined based on this calibration curve.

### (Glass Transition Temperature (Tg) of Each Layer)

The glass transition temperature (Tg) of each layer was measured by putting 10 mg of a constituent resin (a composition) in an aluminum pan and using a differential scanning calorimeter ("DSC-50" manufactured by Rigaku Corporation). After performing a nitrogen substitution for 30 minutes or longer, in a nitrogen gas flow of 10 ml/min, primarily, the temperature was raised from 25°C to 200°C at a rate of 20°C/min, maintained at the raised temperature for 10 minutes, and cooled to 25°C (primary scanning). Next, the temperature was raised to 200°C at a rate of 10°C/min (secondary scanning). The glass transition temperature (Tg) was calculated from a result obtained by the secondary scanning by a midpoint method. Note that when a plurality of Tg data are obtained for a resin composition containing at least two types of resins, a value derived from the resin constituting the main component was used as Tg data.

### (Linear Expansion Rate of Each Layer and Linear Expansion Rate Ratio)

The linear expansion rate is defined as a rate of a change in length per unit temperature change. The linear expansion rate of each layer was measured in accordance with JIS K7197 by using a thermomechanical analyzer ("TMA 4000" manufactured by Brooker AXS Ltd.). That is, for each layer, a press-molded resin plate having the same composition was obtained. Further, a sample having a quadrangular prism shape with a base of 5 mm × 5 mm and a height of 10 mm was cut out from the press-molded resin plate by using a diamond saw to form a smooth end surface. The obtained sample was placed on a quartz plate so that the surface of 5 mm × 5 mm is in contact with the quartz plate. Further, the sample is fixed to the quartz plate by placing a cylindrical rod on the sample and applying a compressive load of 5 g thereto. Next, under an air atmosphere, the temperature was raised from 25°C (the room temperature) to a temperature 10°C lower than the glass transition temperature (Tg) of the sample at a temperature raising rate of 3°C/min, and then cooled to 25°C (primary scanning). Next, the temperature was raised from 25°C (the room temperature) to a temperature 20°C higher than the glass transition temperature (Tg) of the sample at a temperature raising rate of 3°C/min (secondary scanning). The linear expansion rate at each temperature during the above-described secondary scanning was measured and an average linear expansion rate in a range of 30 to 80°C was obtained. The linear expansion rate ratio (SR) was obtained from the linear expansion rate of each layer.

### (Amount of Warping of Extruded Resin Plate)

A rectangular test piece having a short side of 65 mm and a long side of 110 mm was cut out from the obtained extruded resin plate. Note that the short-side direction was parallel to the extruding direction and the long-side direction was perpendicular to the extruding direction (i.e., parallel to the width direction). The obtained test piece was placed on a glass surface plate so that the methacrylic-resin containing layer became the uppermost layer, and was left as it is in an environment of a temperature of 23°C and a relative humidity of 50% for 24 hours. After that, the maximum value of the gap between the test piece and the surface plate was measured by using a feeler gauge, and the measured maximum value was used as an initial amount of warping. Next, in an environmental test apparatus, the test piece was placed on a glass surface plate so that the methacrylic-resin containing layer became the uppermost layer. Then the placed test piece was left as it is in an environment of a temperature of 85°C and a relative humidity of 85% for 72 hours and then left as it is in an environment of a temperature of 23°C and a relative humidity of 50% for 4 hours. After that, an amount of warping was measured in the same manner as the initial stage and the obtained value was used as amount of warping after the high-temperature and high-humidity state. Note that in the test piece, which was placed on the surface plate so that the methacrylic-resin containing layer became the uppermost layer, the sign of the amount of warping was defined as "positive" when downward convex warping occurred and was defined as "negative" when upward convex warping occurred.

### (In-plane Retardation (Re) Value of Extruded Resin Plate)

A 100 mm square test piece was cut out from the extruded resin plate by using a running saw. This test piece was heated for 5 hours in an oven whose temperature was maintained at 100 ±3°C. The Re value was measured both before and after the heating as follows. The test piece was left as it is in an environment of 23°C ±3°C for 10 minutes or longer and then the Re value was measured by using "WPA-100(-L)" manufactured by Photonic Lattice, Inc. The measured point was the center of the test piece. The decreasing rate of the Re value between before and after the heating was determined from the below-shown Expression. [Decreasing rate of Re value (%)] = ([Re value before heating]-[Re value after heating])/[Re value before heating] × 100

### (Angle of Slow Axis and Fast Axis of In-plane Retardation of Extruded Resin Plate)

A 100 mm square test piece was cut out from the extruded resin plate having a width of 1,000 mm at each of places where the extruded resin plate was divided into five equal sections (i.e., at each of the center, ±225 mm from the center, and ±450 mm from the center) by using a running saw. Note that the cutting was performed so that the extruding direction and the width direction were horizontal or vertical with respect to the running saw. After each test piece was left as it is in an environment of 23°C ±3°C for 10 minutes or longer, the absolute values of the angles of the slow and fast axes of the in-plane retardation were measured by using "WPA-100(-L)" manufactured by Photonic Lattice, Inc. Note that the test piece was set so that its four sides were horizontal or vertical with respect to the measurement axis. Further, the angle of the axis in a state where the extruding direction was horizontal was defined as 0°. For each of the angles of the slow and fast axes, an average value of five measurements was obtained. When the angles of the slow and fast axes are different from each other, the smaller one of these values was used as data.

### (Surface Property of Extruded Resin Plate)

Both surfaces of extruded resin plates were visually observed in a room where fluorescent lamps were installed, and their surface quality was evaluated according to the following criteria.
∘ (Good): There is no chattering mark on the surface of the extruded resin plate.
Δ (Acceptable): Chattering marks are observed on the surface of the extruded resin plate, but they are inconspicuous.
× (Failure): Chatter marks are conspicuous on the surface of the extruded resin plate.

### (Overall Temperature of Thermoplastic Resin Laminate (TT))

The overall temperature of the thermoplastic resin laminate at the place where it was separated from the last cooling roll (specifically, the third cooling roll) (TT) was measured by using an infrared thermometer. The measurement point was the center of the extruded resin plate in the width direction.

### (Overall Temperature of Thermoplastic Resin Laminate (TX))

It is very difficult to measure the overall temperature of the thermoplastic resin laminate (TX) directly by using an infrared thermometer when the thermoplastic resin laminate is sandwiched between the second and third cooling rolls because it is blocked by the pair of rolls. Therefore, the overall temperature of the thermoplastic resin laminate immediately before it is transferred from the second cooling roll to the third cooling roll and the overall temperature thereof immediately after it is transferred to the third cooling roll were measured by using an infrared thermometer. The measurement point was the center of the extruded resin plate in the width direction. An average value of the temperature immediately before the transfer to the third cooling roll and the temperature immediately after the transfer thereto was obtained as the temperature TX.

### [Material]

Used materials were as follows.

### <Methacrylic Resin (A)>

(A1) Polymethyl methacrylate (PMMA), "Parapet (Registered Trademark) HR" manufactured by Kuraray Co., Ltd. (MFR at temperature 230°C under 3.8 kg load = 2.0 cm³/10 min).

### <Methacrylic Resin (B)>

The below-shown four kinds of copolymers of MMA and 8-tricyclo [5. 2. 1. 0^{2, 6}] decanyl methacrylate (TCDMA) were prepared. Note that a TC ratio indicates a charging ratio (mass%) of TCDMA to the total amount of the MMA and the TCDMA.

### (B1) MMA/TCDMA copolymer

(TC ratio 20 mass%, Tg = 120°C, linear expansion rate = 7.30×10⁻⁵/K), (B2) MMA/TCDMA copolymer
(TC ratio 35 mass%, Tg = 130°C, linear expansion rate = 7.10×10⁻⁵/K), (B3) MMA/TCDMA copolymer
(TC ratio 45 mass%, Tg = 137°C, linear expansion rate = 6.97×10⁻⁵/K), (B4) MMA/TCDMA copolymer
(TC ratio 60 mass%, Tg = 150°C, linear expansion rate = 6.77×10⁻⁵/K).

### <SMA Resin>

(SMA1) An SMA resin (styrene-maleic anhydride-MMA copolymer, styrene unit/maleic anhydride unit/MMA unit (mass ratio) = 56/18/26, Mw = 150,000, Tg = 138°C, linear expansion rate = 6.25×10⁻⁵/K) was obtained according to a method described in International Patent Publication No. WO2010/013557,

### <Resin Composition (MR)>

The below-shown three kinds of resin compositions were obtained by mixing the methacrylic resin (A1) and the SMA resin (SMA1). Note that an SMA ratio indicates a loading ratio (mass%) of the SMA resin (S1) to the total amount of the methacrylate resin (A1) and the SMA resin (S1).
(MR1) (A1)/(S1) resin composition (SMA ratio: 20 mass%, Tg = 120°C, linear expansion rate = 7.28×10⁻⁵/K),
(MR2) (A1)/(S1) resin composition (SMA ratio: 50 mass%, Tg = 130°C, linear expansion rate = 6.87×10⁻⁵/K),
(MR3) (A1)/(S1) resin composition (SMA ratio: 70 mass%, Tg = 132°C, linear expansion rate = 6.59×10⁻⁵/K).

### <Polycarbonate (PC)>

(PC1) "SD Polyca (Registered Trademark) PCX" manufactured by Sumika Styron Polycarbonate Limited (MFR at temperature 300°C under 1.2 kg load = 6.7 g/10 min, Tg = 150°C, linear expansion rate = 6.93 × 10⁻⁵/K).

### [Example 1] (Manufacturing of Extruded Resin Plate)

Extruded resin plates were molded by using a manufacturing apparatus as shown in Fig. 3.

A methacrylic resin (B1) (MMA/TCDMA copolymer, TC ratio of 20 mass%) melted by using a 65 mmϕ single-screw extruder (manufactured by Toshiba Machine Co., Ltd.) and a polycarbonate (PC1) melted by using a 150 mmϕ single-screw extruder (manufactured by Toshiba Machine Co., Ltd.) were laminated through a multi-manifold die, and a thermoplastic resin laminate in a molten state was coextruded from a T-die.

Next, the molten thermoplastic resin laminate was cooled by sandwiching the laminate between a first cooling roll and a second cooling roll adjacent to each other, winding the laminate around the second cooling roll, sandwiching the laminate between the second cooling roll and a third cooling roll, and winding the laminate around the third cooling. An extruded resin plate obtained after the cooling was pulled out by a pair of take-off rolls. Note that the polycarbonate containing layer was in contact with the third cooling roll.

The overall temperature of the thermoplastic resin laminate when the laminate was sandwiched between the second and third cooling rolls (TX) was adjusted to 165°C by controlling the temperatures of the second and third cooling rolls. The overall temperature of the thermoplastic resin laminate at the place where the laminate was separated from the third cooling roll (TT) was adjusted to 150°C by controlling the temperatures of the second and third cooling rolls. The circumferential speed ratio (V4/V2) between the second cooling roll and the take-off roll was adjusted to 0.995, and the circumferential speed ratio (V3/V2) between the second and third cooling rolls was adjusted to 1.005.

In this way, an extruded resin plate having a two-layered structure having a laminated structure of (methacrylic-resin containing layer (surface layer 1))/(polycarbonate containing layer (surface layer 2)) was obtained. The thickness of the methacrylic-resin containing layer of the extruded resin plate was 0.075 mm and the thickness of the polycarbonate containing layer thereof was 0.925 mm. Further, the overall thickness of the extruded resin plate was 1 mm. Tables 1-1 and 2 show main manufacturing conditions and evaluation results of obtained extruded resin plates. Note that manufacturing conditions that are not shown in the tables are in common in the below-shown examples and comparative examples.

### [Example 2 to 13]

An extruded resin plate having a two-layered structure having a laminated structure of (methacrylic-resin containing layer (surface layer 1))/(polycarbonate containing layer (surface layer 2)) was obtained in the same manner as the Example 1 except that the composition and the manufacturing conditions of the methacrylic-resin containing layer were changed as shown in Tables 1-1 and 1-2. Table 2 shows evaluation results of the extruded resin plate obtained in each example.

### [Examples 14 and 15]

Extruded resin plates were molded by using a manufacturing apparatus as shown in Fig. 3. A methacrylic resin melted by using a 65 mmϕ single-screw extruder, a polycarbonate melted by using a 150 mmϕ single-screw extruder, and a methacrylic resin melted by using a 65 mmϕ single-screw extruder were laminated through a multi-manifold die, and a thermoplastic resin laminate having a three-layered structure in a molten state was coextruded from a T-die. Further, the coextruded thermoplastic resin laminate was cooled by using first to third cooling rolls. And an extruded resin plate obtained after the cooling was pulled out by a pair of take-off rolls.

In this way, an extruded resin plate having a three-layered structure having a laminated structure of (methacrylic-resin containing layer (surface layer 1))/(polycarbonate containing layer (inner layer))/(methacrylic-resin containing layer (surface layer 2)) was obtained. The compositions of the two methacrylic-resin containing layers were the same as each other. The thickness of each methacrylic-resin containing layer was 0.075 mm and the thickness of the polycarbonate containing layer was 0.850 mm. Further, the overall thickness of the extruded resin plate was 1 mm. Tables 1 -2 and 2 show main manufacturing conditions and evaluation results of the extruded resin plate obtained in each example.

**[Table 1-1]**

| | Layer structure | | | | | Linear expansion rate ratio (SR) | TX (°C) | TT (°C) | V3/V2 | V4/V2 |
|---|---|---|---|---|---|---|---|---|---|---|
| | Surface layer 1 | | | Inner layer | Surface layer 2 | | | | | |
| | | Tg(M) (°C) | Linear expansion rate (S2) (10⁻⁵/K) | | | | | | | |
| Example 1 | Methacrylic-resin containing layer (B1) (MMA/TCDMA, TC ratio 20 mass%) | 120 | 7.30 | - | PCl (Tg(PC)=150, Linear expansion rate (S1) (10⁻⁵/K) = 6.93) | +5% | 165 | 150 | 1.005 | 0.995 |
| Example 2 | Methacrylic-resin containing layer (B2) (MMA/TCDMA, TC ratio 35 mass%) | 130 | 7.10 | - | PC1 | +2% | 165 | 150 | 1.005 | 0.995 |
| Example 3 | Methacrylic-resin containing layer (B3) (MMA/TCDMA, TC ratio 45 mass%) | 137 | 6.97 | - | PC1 | + 1% | 168 | 155 | 1.005 | 0.995 |
| Example 4 | Methacrylic-resin containing layer (B4) (MMA/TCDMA, TC ratio 60 mass%) | 150 | 6.77 | - | PC1 | -2% | 168 | 155 | 1.005 | 0.995 |
| Example 5 | Methacrylic-resin containing layer (MR1) (SMA ratio 20 mass%) | 120 | 7.28 | - | PC1 | +5% | 165 | 150 | 1.005 | 0.995 |
| Example 6 | Methacrylic-resin containing layer (MR2) (SMA ratio 50 mass%) | 130 | 6.87 | - | PC1 | -1% | 165 | 150 | 1.005 | 0.995 |
| Example 7 | Methacrylic-resin containing layer (MR3) (SMA ratio 70 mass%) | 132 | 6.59 | - | PC1 | -5% | 168 | 155 | 1.005 | 0.995 |
| Example 8 | Methacrylic-resin containing layer (SMA1) | 138 | 6.25 | - | PC1 | -10% | 168 | 155 | 1.005 | 0.995 |
| Example 9 | Methacrylic-resin containing layer (MR3) (SMA ratio 70 mass%) | 132 | 6.59 | - | PC1 | -5% | 175 | 165 | 1.005 | 0.995 |

**[Table 1-2]**

| | Layer structure | | | | | Linear expansion rate ratio (SR) | TX (°C) | TT (°C) | V3/V2 | V4/V2 |
|---|---|---|---|---|---|---|---|---|---|---|
| | Surface layer 1 | | | Inner layer | Surface layer 2 | | | | | |
| | | Tg(M) (°C) | Linear expansion rate (S2) (10⁻⁵/K) | | | | | | | |
| Example 10 | Methacrylic-resin containing layer (MR3) (SMA ratio 70 mass%) | 132 | 6.59 | - | PC1 | -5% | 168 | 155 | 1.005 | 0.99 |
| Example 11 | Methacrylic-resin containing layer (MR3) (SMA ratio 70 mass%) | 132 | 6.59 | - | PC1 | -5% | 168 | 155 | 1.005 | 0.98 |
| Example 12 | Methacrylic-resin containing layer (MR3) (SMA ratio 70 mass%) | 132 | 6.59 | - | PC1 | -5% | 168 | 155 | 1.010 | 0.99 |
| Example 13 | Methacrylic-resin containing layer (A1) | 110 | 7.56 | - | PC1 | +9% | 168 | 155 | 1.005 | 0.99 |
| Example 14 | Methacrylic-resin containing layer (A1) | 110 | 7.56 | PC1 | Methacrylic-resin containing layer (A1) | +9% | 168 | 150 | 1.005 | 0.99 |
| Example 15 | Methacrylic-resin containing layer (MR3) (SMA ratio 70 mass%) | 132 | 6.59 | PC1 | Methacrylic-resin containing layer (MR3) (SMA ratio 70 mass%) | -5% | 168 | 155 | 1.005 | 0.99 |

**[Table 2]**

| | Warping amount (mm) | | Re (nm) | | Re decreasin grate | Surface propert y | Angle of slow or fast axis of in-plane retardation |
|---|---|---|---|---|---|---|---|
| | Initial | After high temperature and high humidity (85°C85RH) | Initial | After heating (100°C) | | | |
| Example 1 | -0. 1 | +0. 5 | 320 | 305 | 5% | ○ | 5° |
| Example 2 | -0. 2 | +0. 3 | 315 | 300 | 5% | ○ | 5° |
| Example 3 | 0. 0 | +0. 3 | 300 | 290 | 3% | ○ | 6° |
| Example 4 | -0. 1 | +0. 1 | 305 | 290 | 5% | ○ | 6° |
| Example 5 | -0. 1 | +0. 5 | 320 | 310 | 3% | ○ | 7° |
| Example 6 | -0. 3 | +0. 1 | 320 | 305 | 5% | ○ | 7° |
| Example 7 | -0. 2 | +0. 1 | 305 | 290 | 5% | ○ | 8° |
| Example 8 | -0. 3 | -0. 1 | 305 | 295 | 3% | ○ | 8° |
| Example 9 | -0. 2 | +0. 1 | 280 | 275 | 2% | ○ | 8° |
| Example 1.0 | -0. 2 | +0. 1 | 220 | 210 | 5% | ○ | 15° |
| Example 11 | -0. 2 | +0. 1 | 55 | 52 | 5% | ○ | 20° |
| Example 12 | -0. 2 | +0. 1 | 218 | 209 | 4% | ○ | 15° |
| Example 13 | +0. 3 | +1. 2 | 220 | 210 | 5% | ○ | 10° |
| Example 14 | -0. 3 | -0. 2 | 240 | 180 | 25% | ○ | 8° |
| Example 15 | -0. 1 | -0. 1 | 240 | 210 | 13% | ○ | 10° |

### [Comparative Example 1 to 8]

In each of Comparative Examples 1-3 and 5-8, an extruded resin plate having a two-layered structure having a laminated structure of (methacrylic-resin containing layer (surface layer 1))/(polycarbonate containing layer (surface layer 2)) was obtained in the same manner as the Example 1 except that the composition and the manufacturing conditions of the methacrylic-resin containing layer were changed as shown in Table 3.

In Comparative Example 4, an extruded resin plate having a three-layered structure having a laminated structure of (methacrylic-resin containing layer (surface layer 1))/(polycarbonate containing layer (inner layer))/(methacrylic-resin containing layer (surface layer 2)) was obtained in the same manner as the Examples 14 and 15 except that the composition and the manufacturing conditions of the methacrylic-resin containing layer were changed as shown in Table 3.

Table 4 shows evaluation results of the extruded resin plate obtained in each example.

**[Table 3]**

| | Layer structure | | | | | Linear expansion rate ratio (SR) | TX (°C) | TT (°C) | V3/V2 | V4/V2 |
|---|---|---|---|---|---|---|---|---|---|---|
| | Surface layer 1 | | | Inner layer | Surface layer 2 | | | | | |
| | | Tg(M) | Linear expansion rate (S2) (10⁻⁵/K) | | | | | | | |
| Comparative example 1 | Methacrylic-resin containing layer (A1) | 110 | 7.56 | - | PC1 | +9% | 150 | 145 | 1.005 | 0.99 |
| Comparative example 2 | Methacrylic-resin containing layer (MR3) (SMA ratio 70 mass%) | 132 | 6.59 | - | PC1 | -5% | 150 | 145 | 1.005 | 0.995 |
| Comparative example 3 | Methacrylic-resin containing layer (MR3) (SMA ratio 70 mass%) | 132 | 6.59 | - | PC1 | -5% | 180 | 170 | 1.005 | 0.995 |
| Comparative example 4 | Methacrylic-resin containing layer (A1) | 110 | 7.59 | PC1 | Methacrylic-resin containing layer (A1) | +9% | 150 | 140 | 1.002 | 0.99 |
| Comparative example 5 | Methacrylic-resin containing layer (MR3) (SMA ratio 70 mass%) | 132 | 6.59 | - | PC1 | -5% | 168 | 155 | 1.005 | 1.00 |
| Comparative example 6 | Methacrylic-resin containing layer (MR3) (SMA ratio 70 mass%) | 132 | 6.59 | - | PC1 | -5% | 168 | 155 | 1.005 | 1.01 |
| Comparative example 7 | Methacrylic-resin containing layer (MR3) (SMA ratio 70 mass%) | 132 | 6.59 | - | PC1 | -5% | 168 | 155 | 1.005 | 1.015 |
| Comparative example 8 | Methacrylic-resin containing layer (MR3) (SMA ratio 70 mass%) | 132 | 6.59 | - | PC1 | -5% | 168 | 155 | 1.005 | 0.975 |

**[Table 4]**

| | Warping amount (mm) | | Re (nm) | | Re decreasing rate | Surface property | Angle of slow or fast axis of in-plane retardation |
|---|---|---|---|---|---|---|---|
| | Initial | After high temperature and high humidity (85°C85RH) | Initial | After heating (100°C) | | | |
| Comparative example 1 | -0.3 | +0.6 | 240 | 210 | 13% | ○ | 2° |
| Comparative example 2 | -0.6 | -0.3 | 250 | 210 | 16% | ○ | 3° |
| Comparative example 3 | -0.2 | +0.1 | 280 | 275 | 2% | × | 9° |
| Comparative example 4 | -0.7 | -0.5 | 190 | 150 | 21% | ○ | 2° |
| Comparative example 5 | -0.2 | +0.1 | 410 | 395 | 4% | ○ | 4° |
| Comparative example 6 | -0.2 | +0.1 | 600 | 570 | 5% | ○ | 4° |
| Comparative example 7 | -0.2 | +0.1 | 850 | 810 | 5% | ○ | 3° |
| Comparative example 8 | -0.2 | +0.1 | 30 | 27 | 10% | ○ | 22° |

### [Summary of Results]

In Examples 1 to 15, the overall temperature of the thermoplastic resin laminate when the laminate was sandwiched between the second and third cooling rolls (TX) was adjusted to a temperature at least 10°C higher than the glass transition temperature of the polycarbonate containing layer (Tg(PC)), and the overall temperature of the thermoplastic resin laminate at the place where the laminate was separated from the last cooling roll (TT) was adjusted to a temperature range between a temperature 2°C lower than the Tg(PC) and a temperature 19°C higher than the Tg(PC). Further, the circumferential speed ratio (V4/V2) was adjusted to a value that was no lower than 0.98 and lower than 1.0. In each of these examples, it was possible to manufacture an extruded resin plate which is less prone to warping caused by a thermal change, has an Re value within a suitable range and an axial direction of in-plane retardation within a suitable range, and has excellent surface quality.

In each of the Example 1 to 4, an extruded resin plate in which a methacrylic-resin containing layer including a methacrylic resin (B) having a TC ratio of 20 to 60 mass% and a polycarbonate containing layer were laminated was manufactured. In the Example 3 in which a methacrylic resin (B) having a TC ratio of 45 mass% was used, the most preferable results were obtained in consideration of the glass transition temperature (Tg(M)), the linear expansion rate ratio (SR), the amount of warping, the Re value and its decreasing rate.

In each of the Examples 5 to 9, an extruded resin plate in which a methacrylic-resin containing layer composed of a resin composition having an SMA ratio of 20 to 70 mass% (MR) or an SMA resin, and a polycarbonate containing layer were laminated was manufactured. In particular, in the Examples 7 and 9 in which a resin composition having an SMA ratio of 70 mass% (MR) was used, the most preferable results were obtained because the Re value and its decreasing rate were suitable and the absolute values of the amount of warping were small.

In the Example 1 to 9, the circumferential speed ratio (V4/V2) was fixed at 0.995. In the Examples 10 and 11, a methacrylic-resin containing layer composed of a resin composition having an SMA ratio of 70 mass% (MR) was used. Further, the temperature (TT) was fixed at 155°C and the circumferential speed ratio (V4/V2) was adjusted to 0.98 to 0.99. In the Example 10 in which the circumferential speed ratio (V4/V2) was relatively high, an extruded resin plate having a relatively high Re value was obtained.

In the Comparative Example 3, the temperature (TT) was increased beyond the temperature range between the temperature 2°C lower than the glass transition temperature Tg(PC) of the polycarbonate containing layer and the temperature 19°C higher than the Tg(PC). As a result, an extruded resin plate having poor surface quality was obtained. In each of the Comparative Examples 1, 2 and 4, the temperature (TX) was decreased beyond the temperature range between the temperature 2°C lower than the glass transition temperature Tg(PC) of the polycarbonate containing layer and the temperature 19°C higher than the Tg(PC). As a result, a periodic change of the Re value occurred and hence an unsatisfactory extruded resin plate was obtained.

### Reference Signs List

- 11: T-DIE
- 12: FIRST COOLING ROLL
- 13: SECOND COOLING ROLL
- 14: THIRD COOLING ROLL
- 15: TAKE-OFF ROLL
- 16: EXTRUDED RESIN PLATE

## Claims

1. An extruded resin plate in which a layer containing a methacrylic resin is laminated on at least one surface of a layer containing a polycarbonate, wherein when an angle of an axis parallel to the extruding direction is defined as 0°, the absolute value of an angle of a slow axis or a fast axis of in-plane retardation is 5 to 45°,
the glass transition temperature of the layer containing the methacrylic resin is 110°C or higher;
when the extruded resin plate is heated at a constant temperature within a range of 75 to 100°C for 5 hours, the in-plane retardation value of at least a part of the extruded resin plate in a width direction is 50 to 330 nm both before and after the heating,
the decreasing rate of the retardation value of the extruded resin plate after the heating to the retardation value thereof before the heating is lower than 30%,
the ratio ((S2-S1)/S1) which is composed of the difference (S2-S1) between the linear expansion rate (S1) of the layer containing the polycarbonate and the linear expansion rate (S2) of the layer containing the methacrylic resin, and the linear expansion rate (S1) of the layer containing the polycarbonate is between -10% and +10%, and
the angle of a slow axis or a fast axis of in-plane retardation, the glass transition temperature, the in-plane retardation value, the linear expansion rate, as well as the decreasing rate of the
retardation value are determined as indicated in the description.

2. The extruded resin plate according to claim 1, wherein
when the extruded resin plate is heated at 75°C or 100°C for 5 hours, the in-plane retardation value of at least the part of the extruded resin plate in the width direction is 50 to 330 nm both before and after the heating, and
the decreasing rate of the retardation value after the heating to the retardation value thereof before the heating is lower than 30%.

3. The extruded resin plate according to claim 1 or 2, wherein the in-plane retardation value of at least the part in the width direction is 80 to 250 nm both before and after the heating.

4. The extruded resin plate according to any one of claims 1 to 3, wherein the decreasing rate of the retardation value after the heating to the retardation value thereof before the heating is lower than 15%.

5. The extruded resin plate any one of claims 1 to 4, further comprising an abrasion resistant layer on at least one surface.

6. A method for manufacturing the extruded resin plate according to claim 1, comprising a step (X) comprising:
coextruding a thermoplastic resin laminate in which the layer containing the methacrylic resin is laminated on the at least one surface of the layer containing the polycarbonate from a T-die in a molten state;
cooling the molten thermoplastic resin laminate by using at least three cooling rolls arranged adjacent to each other by repeating an operation a plurality of times from n=1 (n≥1), the operation including sandwiching the thermoplastic resin laminate between an nth cooling roll and an (n+1)th cooling roll, and winding the thermoplastic resin laminate around the (n+1)th cooling roll; and
pulling out the extruded resin plate obtained after the cooling by using a take-off roll, wherein,
the overall temperature of the thermoplastic resin laminate at the time when the thermoplastic resin laminate is sandwiched between a second cooling roll and a third cooling roll (TX) is adjusted to a temperature at least 10°C higher than the glass transition temperature of the layer containing the polycarbonate,
the overall temperature of the thermoplastic resin laminate at a place where the thermoplastic resin laminate is separated from a last cooling roll (TT) is adjusted to a temperature range between a temperature 2°C lower than the glass transition temperature of the layer containing the polycarbonate and a temperature 19°C higher than the glass transition temperature thereof, and
the circumferential speed ratio (V4/V2) between the circumferential speed (V4) of the take-off roll and the circumferential speed (V2) of the second cooling roll is adjusted to a value no lower than 0.98 and lower than 1.0.

7. The method for manufacturing an extruded resin plate according to claim 6, wherein the methacrylic resin contains 40 to 80 mass% of a structural unit derived from methyl methacrylate and 60 to 20 mass% of a structural unit derived from an methacrylic acid alicyclic hydrocarbon ester.

8. The method for manufacturing an extruded resin plate according to claim 7, wherein the methacrylic acid alicyclic hydrocarbon ester is a methacrylic acid polycyclic aliphatic hydrocarbon ester.

9. The method for manufacturing an extruded resin plate according to claim 6, wherein the layer containing the methacrylic resin contains 5 to 80 mass% of a methacrylic resin and 95 to 20 mass% of a copolymer containing a structural unit derived from an aromatic vinyl compound and a structural unit derived from maleic anhydride.

10. The method for manufacturing an extruded resin plate according to claim 9, wherein the copolymer contains 50 to 84 mass% of a structural unit derived from the aromatic vinyl compound, 15 to 49 mass% of a structural unit derived from maleic anhydride, and 1 to 35 mass% of a structural unit derived from a methacrylic acid ester.

11. The method for manufacturing an extruded resin plate according to claim 10, wherein the methacrylic acid ester is methyl methacrylate.

12. The method for manufacturing an extruded resin plate according to any one of claims 6 to 11, further comprising, after the step (X), a step (Y) of heating the extruded resin plate at a temperature of 65 to 110°C for 1 to 30 hours, wherein when an angle of an axis parallel to the extruding direction is defined as 0°, the absolute value of an angle of a slow axis or a fast axis of in-plane retardation of the extruded resin plate obtained after the cooling is 5 to 45°,
the in-plane retardation value of at least a part of the extruded resin plate in a width direction is 50 to 330 nm both before and after the heating, and
the decreasing rate of the retardation value of the extruded resin plate after the heating to the retardation value thereof before the heating is lower than 30%.

## Patentansprüche

1. Extrudierte Harzplatte, bei der eine Schicht, die ein Methacrylharz enthält, auf mindestens eine Oberfläche einer Schicht, die ein Polycarbonat enthält, laminiert ist, wobei
wenn ein Winkel einer Achse parallel zur Extrusionsrichtung als 0° definiert ist, der absolute Wert eines Winkels einer langsamen Achse oder einer schnellen Achse der In-Ebene-Verzögerung 5 bis 45° beträgt,
die Glasübergangstemperatur der Schicht, die das Methacrylharz enthält, 110°C oder höher ist;
wenn die extrudierte Harzplatte bei einer konstanten Temperatur in einem Bereich von 75 bis 100°C für 5 Stunden erwärmt wird, der In-Ebene-Verzögerungswert von mindestens einem Teil der extrudierten Harzplatte in einer Breitenrichtung sowohl vor als auch nach dem Erwärmen 50 bis 330 nm beträgt,
die Abnahmerate des Verzögerungswertes der extrudierten Harzplatte nach dem Erwärmen zu ihrem Verzögerungswert vor dem Erwärmen geringer als 30 % ist,
das Verhältnis ((S2-S1)/S1), das sich aus der Differenz (S2-S1) zwischen der linearen Ausdehnungsrate (S1) der Schicht, die das Polycarbonat enthält und der linearen Ausdehnungsrate (S2) der Schicht, die das Methacrylharz enthält, und der linearen Ausdehnungsrate (S1) der Schicht, die das Polycarbonat enthält zusammensetzt, zwischen -10% und +10% liegt, und
der Winkel einer langsamen Achse oder einer schnellen Achse der In-Ebene-Verzögerung, die Glasübergangstemperatur, der In-Ebene-Verzögerungswert, die lineare Ausdehnungsrate sowie die Abnahmerate des Verzögerungswertes wie in der Beschreibung angegeben bestimmt werden.

2. Extrudierte Harzplatte nach Anspruch 1, wobei
wenn die extrudierte Harzplatte 5 Stunden lang auf 75°C oder 100°C erwärmt wird, der In-Ebene-Verzögerungswert von mindestens dem Teil der extrudierten Harzplatte in der Breitenrichtung sowohl vor als auch nach dem Erwärmen 50 bis 330 nm beträgt, und
die Abnahmerate des Verzögerungswertes nach dem Erwärmen zu seinem Verzögerungswert vor dem Erwärmen weniger als 30 % beträgt.

3. Extrudierte Harzplatte nach Anspruch 1 oder 2, wobei der In-Ebene-Verzögerungswert mindestens des Teils in der Breitenrichtung sowohl vor als auch nach dem Erwärmen 80 bis 250 nm beträgt.

4. Extrudierte Harzplatte nach einem der Ansprüche 1 bis 3, wobei die Abnahmerate des Verzögerungswertes nach dem Erwärmen zu ihrem Verzögerungswert vor dem Erwärmen weniger als 15 % beträgt.

5. Extrudierte Harzplatte nach einem der Ansprüche 1 bis 4, die weiter eine abriebfeste Schicht auf mindestens einer Oberfläche aufweist.

6. Verfahren zur Herstellung der extrudierten Harzplatte nach Anspruch 1, umfassend einen Schritt (X), umfassend:
Coextrudieren eines thermoplastischen Harzlaminats, bei dem die Schicht, die das Methacrylharz enthält, auf die mindestens eine Oberfläche der Schicht, die das Polycarbonat enthält, aus einer T-Düse in geschmolzenem Zustand laminiert wird;
Kühlen des geschmolzenen thermoplastischen Harzlaminats unter Verwendung von mindestens drei Kühlwalzen, die nebeneinander angeordnet sind, durch mehrmaliges Wiederholen eines Vorgangs von n=1 (n≥1), wobei der Vorgang das sandwichartige Anordnen des thermoplastischen Harzlaminats zwischen einer n-ten Kühlwalze und einer (n+1)-ten Kühlwalze und das Wickeln des thermoplastischen Harzlaminats um die (n+1)-te Kühlwalze umfasst; und
Herausziehen der nach dem Kühlen erhaltenen extrudierten Harzplatte unter Verwendung einer Abnahmewalze, wobei,
die Gesamttemperatur des thermoplastischen Harzlaminats zu dem Zeitpunkt, zu dem das thermoplastische Harzlaminat zwischen einer zweiten Kühlwalze und einer dritten Kühlwalze (TX) sandwichartig angeordnet ist, auf eine Temperatur eingestellt wird, die mindestens 10°C höher ist als die Glasübergangstemperatur der Schicht, die das Polycarbonat enthält,
die Gesamttemperatur des thermoplastischen Harzlaminats an einer Stelle, an der das thermoplastische Harzlaminat von einer letzten Kühlwalze (TT) getrennt wird, auf einen Temperaturbereich zwischen einer Temperatur, die 2°C niedriger als die Glasübergangstemperatur der Schicht, die das Polycarbonat enthält, ist, und einer Temperatur, die 19°C höher als deren Glasübergangstemperatur ist, eingestellt wird, und
das Umfangsgeschwindigkeitsverhältnis (V4/V2) zwischen der Umfangsgeschwindigkeit (V4) der Abnahmewalze und der Umfangsgeschwindigkeit (V2) der zweiten Kühlwalze auf einen Wert von nicht weniger als 0,98 und weniger als 1,0 eingestellt wird.

7. Verfahren zur Herstellung einer extrudierten Harzplatte nach Anspruch 6, wobei das Methacrylharz 40 bis 80 Massen-% einer von Methylmethacrylat abgeleiteten Struktureinheit und 60 bis 20 Massen-% einer von einem alicyclischen Methacrylsäure-Kohlenwasserstoffester abgeleiteten Struktureinheit enthält.

8. Verfahren zur Herstellung einer extrudierten Harzplatte nach Anspruch 7, wobei der alicyclische Methacrylsäure-Kohlenwasserstoffester ein polycyclischer aliphatischer Methacrylsäure-Kohlenwasserstoffester ist.

9. Verfahren zur Herstellung einer extrudierten Harzplatte nach Anspruch 6, wobei die Schicht, die das Methacrylharz enthält, 5 bis 80 Massen-% eines Methacrylharzes und 95 bis 20 Massen-% eines Copolymers enthält, das eine von einer aromatischen Vinylverbindung abgeleitete Struktureinheit und eine von Maleinsäureanhydrid abgeleitete Struktureinheit enthält.

10. Verfahren zur Herstellung einer extrudierten Harzplatte nach Anspruch 9, wobei das Copolymer 50 bis 84 Massen-% einer von der aromatischen Vinylverbindung abgeleiteten Struktureinheit, 15 bis 49 Massen-% einer von Maleinsäureanhydrid abgeleiteten Struktureinheit und 1 bis 35 Massen-% einer von einem Methacrylsäureester abgeleiteten Struktureinheit enthält.

11. Verfahren zur Herstellung einer extrudierten Harzplatte nach Anspruch 10, wobei der Methacrylsäureester Methylmethacrylat ist.

12. Verfahren zur Herstellung einer extrudierten Harzplatte nach einem der Ansprüche 6 bis 11, weiter umfassend, nach dem Schritt (X), einen Schritt (Y) des Erwärmens der extrudierten Harzplatte bei einer Temperatur von 65 bis 110°C für 1 bis 30 Stunden, wobei
wenn ein Winkel einer Achse parallel zur Extrusionsrichtung als 0° definiert ist, der absolute Wert eines Winkels einer langsamen Achse oder einer schnellen Achse der In-Ebene-Verzögerung der extrudierten Harzplatte, der nach dem Abkühlen erhalten wird, 5 bis 45° beträgt,
der Wert der In-Ebene-Verzögerung mindestens eines Teils der extrudierten Harzplatte in Breitenrichtung sowohl vor als auch nach dem Erwärmen 50 bis 330 nm beträgt, und
die Abnahmerate des Verzögerungswertes der extrudierten Harzplatte nach dem Erwärmen zu ihrem Verzögerungswert vor dem Erwärmen geringer als 30% ist.

## Revendications

1. Plaque de résine extrudée dans laquelle une couche contenant une résine méthacrylique est stratifiée sur au moins une surface d'une couche contenant un polycarbonate, dans laquelle lorsqu'un angle d'un axe parallèle à la direction d'extrusion est défini comme 0°, la valeur absolue d'un angle d'un axe lent ou d'un axe rapide de retard dans le plan est de 5 à 45°,
la température de transition vitreuse de la couche contenant la résine méthacrylique est de 110 °C ou supérieure ;
lorsque la plaque de résine extrudée est chauffée à une température constante au sein d'une plage de 75 à 100 °C pendant 5 heures, la valeur de retard dans le plan d'au moins une partie de la plaque de résine extrudée dans un sens de la largeur est de 50 à 330 nm à la fois avant et après le chauffage,
le taux de diminution de la valeur de retard de la plaque de résine extrudée après le chauffage à la valeur de retard de celle-ci avant le chauffage est inférieur à 30%,
le rapport ((S2-S1)/S1) qui est composé de la différence (S2-S1) entre le taux de dilatation linéaire (S1) de la couche contenant le polycarbonate et le taux de dilatation linéaire (S2) de la couche contenant la résine méthacrylique, et le taux de dilatation linéaire (S1) de la couche contenant le polycarbonate est compris entre -10 % et +10 %, et
l'angle d'un axe lent ou d'un axe rapide de retard dans le plan, la température de transition vitreuse, la valeur de retard dans le plan, le taux de dilatation linéaire ainsi que le taux de diminution de la valeur de retard sont déterminés tel qu'indiqué dans la description.

2. Plaque de résine extrudée selon la revendication 1, dans laquelle
lorsque la plaque de résine extrudée est chauffée à 75 °C ou 100 °C pendant 5 heures, la valeur de retard dans le plan d'au moins la partie de la plaque de résine extrudée dans le sens de la largeur est de 50 à 330 nm à la fois avant et après le chauffage, et
le taux de diminution de la valeur de retard après le chauffage à la valeur de retard de celle-ci avant le chauffage est inférieur à 30 %.

3. Plaque de résine extrudée selon la revendication 1 ou 2, dans laquelle la valeur de retard dans le plan d'au moins la partie dans le sens de la largeur est de 80 à 250 nm à la fois avant et après le chauffage.

4. Plaque de résine extrudée selon l'une quelconque des revendications 1 à 3, dans laquelle le taux de diminution de la valeur de retard après le chauffage à la valeur de retard de celle-ci avant le chauffage est inférieur à 15 %.

5. Plaque de résine extrudée selon l'une quelconque des revendications 1 à 4, comprenant en outre une couche résistante à l'abrasion sur au moins une surface.

6. Procédé de fabrication de la plaque de résine extrudée selon la revendication 1, comprenant une étape (X) comprenant :
coextruder un stratifié de résine thermoplastique dans lequel la couche contenant la résine méthacrylique est stratifiée sur l'au moins une surface de la couche contenant le polycarbonate à partir d'une filière en T dans un état fondu ;
refroidir le stratifié de résine thermoplastique fondu en utilisant au moins trois rouleaux de refroidissement agencés de manière adjacente l'un à l'autre en répétant une opération une pluralité de fois à partir de n=1 (n≥1), l'opération incluant mettre en sandwich le stratifié de résine thermoplastique entre un nième rouleau de refroidissement et un (n+1)ième rouleau de refroidissement, et enrouler le stratifié de résine thermoplastique autour du (n+1)ième rouleau de refroidissement ; et
extraire la plaque de résine extrudée obtenue après le refroidissement en utilisant un rouleau dévideur, dans lequel
la température globale du stratifié de résine thermoplastique au moment où le stratifié de résine thermoplastique est mis en sandwich entre un deuxième rouleau de refroidissement et un troisième rouleau de refroidissement (TX) est ajustée sur une température supérieure d'au moins 10 °C à la température de transition vitreuse de la couche contenant le polycarbonate,
la température globale du stratifié de résine thermoplastique à un endroit où le stratifié de résine thermoplastique est séparé d'un dernier rouleau de refroidissement (TT) est ajustée sur une plage de température comprise entre une température inférieure de 2 °C à la température de transition vitreuse de la couche contenant le polycarbonate et une température supérieure de 19 °C à la température de transition vitreuse de celle-ci, et
le rapport de vitesses circonférentielles (V4/V2) entre la vitesse circonférentielle (V4) du rouleau dévideur et la vitesse circonférentielle (V2) du deuxième rouleau de refroidissement est ajusté sur une valeur non inférieure à 0,98 et inférieure à 1,0.

7. Procédé de fabrication d'une plaque de résine extrudée selon la revendication 6, dans lequel la résine méthacrylique contient 40 à 80 % en masse d'une unité structurelle dérivée de méthacrylate de méthyle et 60 à 20 % en masse d'une unité structurelle dérivée d'un ester d'hydrocarbure alicyclique d'acide méthacrylique.

8. Procédé de fabrication d'une plaque de résine extrudée selon la revendication 7, dans lequel l'ester d'hydrocarbure alicyclique d'acide méthacrylique est un ester d'hydrocarbure aliphatique polycyclique d'acide méthacrylique.

9. Procédé de fabrication d'une plaque de résine extrudée selon la revendication 6, dans lequel la couche contenant la résine méthacrylique contient 5 à 80 % en masse d'une résine méthacrylique et 95 à 20 % en masse d'un copolymère contenant une unité structurelle dérivée d'un composé de vinyle aromatique et une unité structurelle dérivée d'anhydride maléique.

10. Procédé de fabrication d'une plaque de résine extrudée selon la revendication 9, dans lequel le copolymère contient 50 à 84 % en masse d'une unité structurelle dérivée du composé de vinyle aromatique, 15 à 49 % en masse d'une unité structurelle dérivée d'anhydride maléique et 1 à 35 % en masse d'une unité structurelle dérivée d'un ester d'acide méthacrylique.

11. Procédé de fabrication d'une plaque de résine extrudée selon la revendication 10, dans lequel l'ester d'acide méthacrylique est le méthacrylate de méthyle.

12. Procédé de fabrication d'une plaque de résine extrudée selon l'une quelconque des revendications 6 à 11, comprenant en outre, après l'étape (X), une étape (Y) de chauffage de la plaque de résine extrudée à une température de 65 à 110 °C pendant 1 à 30 heures, dans lequel
lorsqu'un angle d'un axe parallèle à la direction d'extrusion est défini comme 0°, la valeur absolue d'un angle d'un axe lent ou d'un axe rapide de retard dans le plan de la plaque de résine extrudée obtenue après le refroidissement est de 5 à 45°,
la valeur de retard dans le plan d'au moins une partie de la plaque de résine extrudée dans un sens de la largeur est de 50 à 330 nm à la fois avant et après le chauffage, et
le taux de diminution de la valeur de retard de la plaque de résine extrudée après le chauffage à la valeur de retard de celle-ci avant le chauffage est inférieur à 30 %.
